(19) Europäisches Patentamt
European Patent Office
Office européen des brevets

(11) **EP 4 099 317 A1**

(12) **EUROPEAN PATENT APPLICATION**
published in accordance with Art. 153(4) EPC

(43) Date of publication:
**07.12.2022 Bulletin 2022/49**

(21) Application number: **21748097.9**

(22) Date of filing: **12.01.2021**

(51) International Patent Classification (IPC):
**G10L 15/00** (2013.01)    **G10L 15/28** (2013.01)
**G06F 3/01** (2006.01)    **G06F 3/16** (2006.01)

(52) Cooperative Patent Classification (CPC):
**G06F 3/01; G06F 3/16; G10L 15/00; G10L 15/28**

(86) International application number:
**PCT/JP2021/000674**

(87) International publication number:
**WO 2021/153214 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.01.2020 JP 2020014528**

(71) Applicant: **Sony Group Corporation**
**Tokyo 108-0075 (JP)**

(72) Inventors:
• **TAKI, Yuhei**
**Tokyo 108-0075 (JP)**
• **IWASE, Hiro**
**Tokyo 108-0075 (JP)**
• **SAWAI, Kunihito**
**Tokyo 108-0075 (JP)**

(74) Representative: **2SPL Patentanwälte PartG mbB**
**Landaubogen 3**
**81373 München (DE)**

(54) **INFORMATION PROCESSING DEVICE AND INFORMATION PROCESSING METHOD**

(57) An information processing apparatus of the present disclosure includes an acquisition unit that acquires respiration information indicating respiration of a user, and a determination unit that determines an operation amount regarding an operation by the user on the basis of the respiration of the user indicated by the respiration information acquired by the acquisition unit.

*FIG. 1*

**Description**

TECHNICAL FIELD

The present disclosure relates to an information processing apparatus and an information processing method.

BACKGROUND ART

In recent years, a technology of a voice interaction system that communicates (interacts) with a user by voice has been provided. For example, a technology for determining an utterance timing in a voice interaction system is known (for example, Patent Document 1) .

CITATION LIST

PATENT DOCUMENT

Patent Document 1: Japanese Patent Application Laid-Open No. 2017-211596

SUMMARY OF THE INVENTION

PROBLEMS TO BE SOLVED BY THE INVENTION

According to the related art, an utterance timing of a voice interaction system is determined on the basis of a timing at which respiration of a user changes from exhalation to inspiration.

However, in the related art, it is not always possible to reduce an operation load of the user. For example, in the related art, only the timing at which the system side utters to the user is determined, and the load on which the user performs an operation by utterance and the like is not considered. Therefore, it is desired to reduce the operation load of the user.

Accordingly, the present disclosure proposes an information processing apparatus and an information processing method capable of reducing the operation load of the user.

SOLUTIONS TO PROBLEMS

In order to solve the above problem, according to an aspect of the present disclosure, there is provided an information processing apparatus including: an acquisition unit that acquires respiration information indicating respiration of a user; and a determination unit that determines an operation amount regarding an operation by the user on the basis of the respiration of the user indicated by the respiration information acquired by the acquisition unit.

BRIEF DESCRIPTION OF DRAWINGS

Fig. 1 is a diagram illustrating an example of information processing according to one embodiment of the present disclosure.

Fig. 2 is a diagram illustrating an example of reflection of respiration of a user on an operation amount.

Fig. 3 is a diagram illustrating an example of display on the basis of the operation amount.

Fig. 4 is a diagram illustrating an example of the display on the basis of the operation amount.

Fig. 5 is a diagram illustrating a configuration example of an information processing system according to one embodiment of the present disclosure.

Fig. 6 is a diagram illustrating a configuration example of the information processing apparatus according to one embodiment of the present disclosure.

Fig. 7 is a diagram illustrating an example of a threshold information storage unit according to one embodiment of the present disclosure.

Fig. 8 is a diagram illustrating a configuration example of a terminal device according to one embodiment of the present disclosure.

Fig. 9 is a flowchart illustrating a processing procedure of the information processing apparatus according to one embodiment of the present disclosure.

Fig. 10 is a sequence diagram illustrating the processing procedure of the information processing system according to one embodiment of the present disclosure.

Fig. 11 is a flowchart illustrating processing of the information processing system according to one embodiment of the present disclosure.

Fig. 12 is a diagram illustrating an example of the reflection of the respiration of the user on the operation amount.

Fig. 13 is a diagram illustrating an example of the reflection of the respiration of the user on the operation amount.

Fig. 14 is a diagram illustrating an example of the reflection of the respiration of the user on the operation amount.

Fig. 15 is a diagram illustrating an example of the reflection of the respiration of the user on the operation amount.

Fig. 16 is a diagram illustrating an example of prediction of the operation amount.

Fig. 17 is a diagram illustrating an example of display of the predicted operation amount.

Fig. 18 is a diagram illustrating an example of use of the operation amount.

Fig. 19 is a view illustrating an example of switching between display and non-display of an indicator.

Fig. 20 is a diagram illustrating an example of switching of a GUI operation target.

Fig. 21 is a diagram illustrating a configuration example of an information processing apparatus according to a modification example of the present disclosure.

Fig. 22 is a hardware configuration diagram illustrating an example of a computer that implements functions of the information processing apparatus.

MODE FOR CARRYING OUT THE INVENTION

Hereinafter, embodiments of the present disclosure will be described in detail with reference to the drawings. Note that the information processing apparatus and the information processing method according to the present application are not limited by the embodiments. Furthermore, in each of the following embodiments, the same parts are denoted by the same reference numerals, and redundant description will be omitted.

The present disclosure will be described according to the following order of items.

1. Embodiments

    1-1. Overview of information processing according to embodiment of present disclosure

        1-1-1. Background, effects, and the like
        1-1-2. Display example on the basis of operation amount

            1-1-2-1. Absolute value display example
            1-1-2-2. Relative value display example

        1-1-3. Determination of object using utterance before respiration
        1-1-4. Sensor example

            1-1-4-1. Contact type
            1-1-4-2. Non-contact type

    1-2. Configuration of information processing system according to embodiment
    1-3. Configuration of information processing apparatus according to embodiment
    1-4. Configuration of terminal device according to embodiment
    1-5. Procedure of information processing according to embodiment

        1-5-1. Procedure of processing according to information processing apparatus
        1-5-2. Procedure of processing according to information processing system
        1-5-3. Specific example of processing according to information processing system

    1-6. Example of reflection of respiration on operation amount

        1-6-1. Example of reflection at the time of sudden inspiration
        1-6-2. Example of reflection on operation amount of expiration
        1-6-3. Example in which expiration at the time of inspiration is not reflected
        1-6-4. Example in which inspiration at the time of the expiration is not reflected

    1-7. Prediction processing

1-7-1. Prediction example of operation amount
1-7-2. Display example of predicted operation amount

1-8. Other application examples

1-8-1. Operation of selector indicator
1-8-2. Example of switching between display and non-display of indicator
1-8-3. Example of switching GUI operation target

2. Other embodiments

2-1. Modification example (example in which determination processing and the like are performed on client side)
2-2. Configuration example of information processing apparatus according to modification example
2-3. Others

3. Effects according to present disclosure
4. Hardware configuration

[1. Embodiment]

[1-1. Overview of information processing according to embodiment of present disclosure]

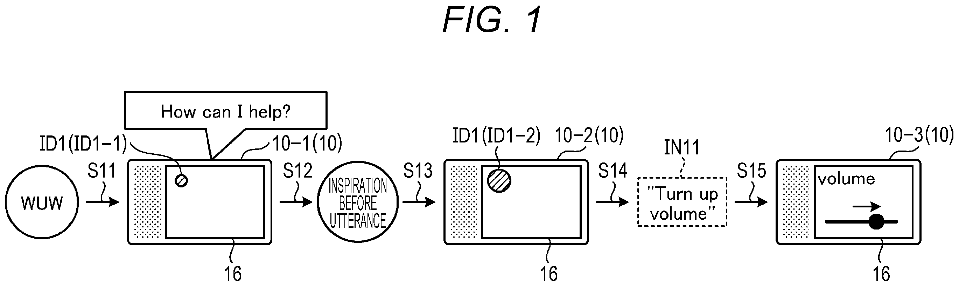

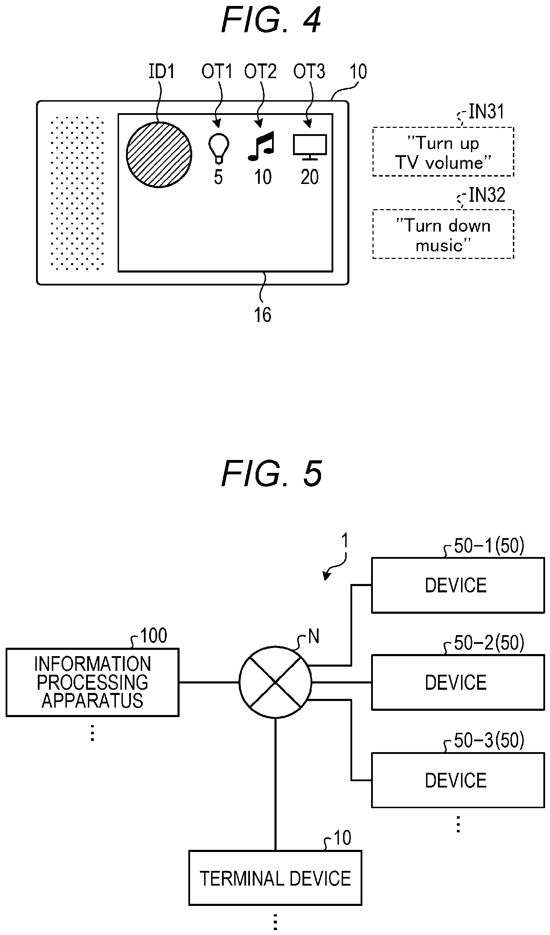

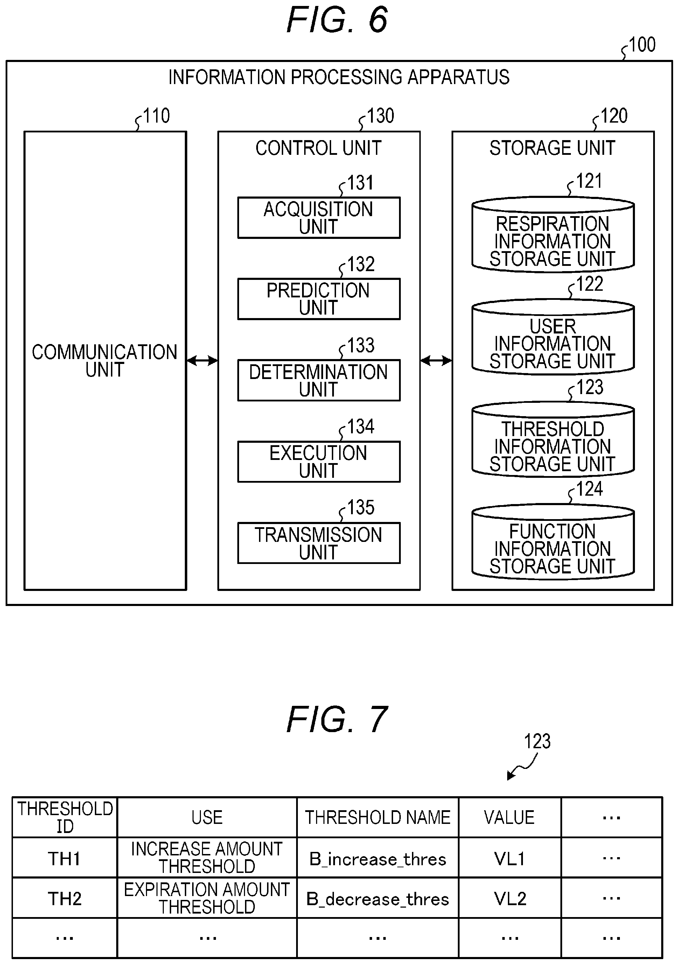

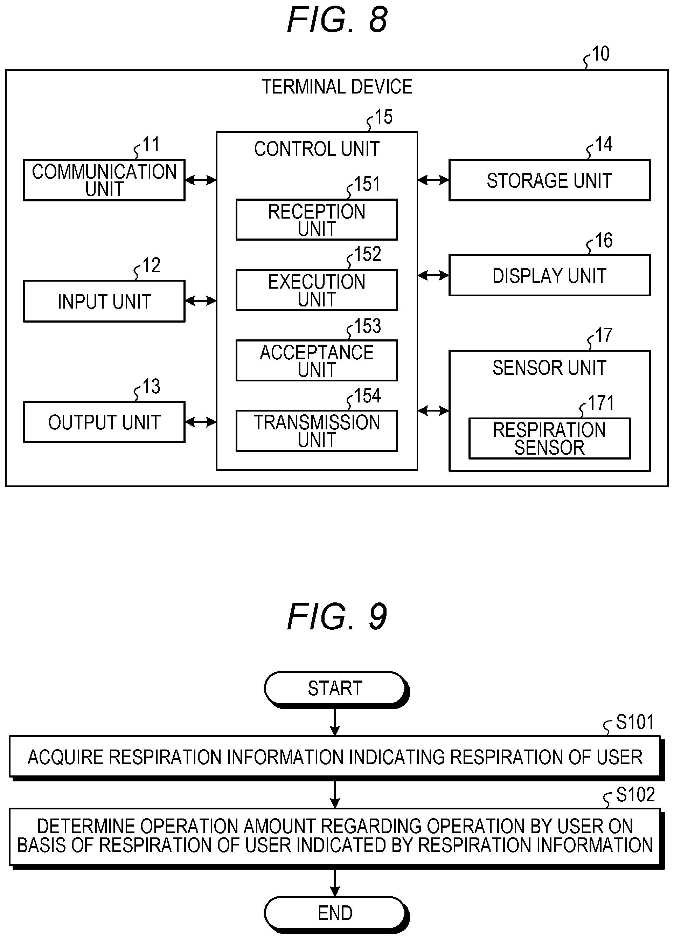

Fig. 1 is a diagram illustrating an example of information processing according to one embodiment of the present disclosure. The information processing according to one embodiment of the present disclosure is achieved by an information processing system 1 (see Fig. 5) including an information processing apparatus 100 (see Fig. 6) and a terminal device 10 (see Fig. 8).

The information processing apparatus 100 is an information processing apparatus that executes the information processing according to one embodiment. The example of Fig. 1 illustrates a case where the information processing apparatus 100 determines an amount (hereinafter also referred to as an "operation amount") regarding an operation by a user on the basis of respiration of the user, and determines an operation target on the basis of the subsequent utterance of the user. Note that, after the operation target is determined on the basis of the utterance of the user, the operation amount regarding the operation by the user may be determined on the basis of the subsequent respiration of the user, which will be described later. Furthermore, the example of Fig. 1 illustrates a case where sensor information detected by a respiration sensor 171 (see Fig. 8) of the terminal device 10 used by the user is used as the respiration information. Note that, the example of Fig. 1 illustrates a case where the respiration information indicating the respiration of the user is detected by the respiration sensor 171 using a millimeter wave radar. However, the present invention is not limited to the millimeter wave radar, and any sensor may be used as long as the respiration information of the user can be detected. This point will be described later.

Hereinafter, Fig. 1 will be specifically described. Each processing illustrated in Fig. 1 may be performed by any device of the information processing apparatus 100 and the terminal device 10 of the information processing system 1. The processing described by the information processing system 1 as the main body of the processing may be performed by any device included in the information processing system 1. Hereinafter, a case where the information processing apparatus 100 performs processing (determination processing) of determining an operation amount regarding an operation by a user U1 by using the respiration information indicating the respiration of the user U1 detected by the terminal device 10 will be described as an example. Note that, in Fig. 1, a case where the information processing apparatus 100 performs the determination processing (information processing) will be described as an example, but the terminal device 10 may perform the determination processing (information processing). This point will be described later.

First, in the example of Fig. 1, the user U1 utters Wake up Word (WUW) (Step S11). For example, the user U1 makes an utterance for activating voice recognition of the information processing system 1. The information processing system 1 starts voice recognition according to the utterance of WUW by the user U1. The information processing apparatus 100 or the terminal device 10 activates the voice recognition according to the utterance of WUW by the user U1. The example of Fig. 1 illustrates a case where the terminal device 10 is a tablet terminal including a display unit 16 that is a display (display screen) and an output unit 13 (see Fig. 8) that outputs sound. Note that the terminal device 10 is not limited to the tablet terminal as illustrated in Fig. 1, and may be any device such as a smart speaker or a smartphone, but details of this point will be described later.

In the example of Fig. 1, the terminal device 10 activates the voice recognition according to the utterance of WUW by the user U1. The terminal device 10 performs processing of predetermined voice output at the time of the activation of the voice recognition. In the example of Fig. 1, as illustrated in a terminal device 10-1, "How can I help?"

is output by voice. As described above, in Fig. 1, the terminal device 10 may be distinguished from terminal devices 10-1, 10-2, and 10-3 according to the change in the display of the terminal device 10. Note that the terminal devices 10-1, 10-2, and 10-3 are the same terminal device 10, and will be referred to as a terminal device 10 in a case where the terminal devices are described without distinction.

In the example of Fig. 1, an indicator ID1, which is an indicator (inspiration amount indicator) corresponding to an inspiration amount of the user U1, is displayed on the display unit 16 of the terminal device 10 as illustrated in the terminal device 10-1. The indicator ID1 is a display object whose size changes according to the respiration of the user U1. That is, the indicator ID1 is a display object indicating the operation amount determined on the basis of the respiration of the user by its size. For example, the indicator ID1-1 illustrated in the terminal device 10-1 indicates an initial state of the indicator ID1. As described above, in Fig. 1, the indicator ID1 may be distinguished from the indicator ID1-1 and the indicator ID1-2 in accordance with the change in the display of the indicator ID1. Note that the indicators ID1-1 and ID1-2 will be referred to as indicator ID1 in a case where the indicators are described without distinction.

Inspiration before the utterance of the user U1 is performed (Step S12). For example, the user U1 breathes before performing the utterance, and the information processing apparatus 100 acquires the respiration information indicating the respiration of the user U1. For example, the information processing apparatus 100 acquires the respiration information indicating the respiration of the user U1 from the terminal device 10 used by the user U1. The information processing apparatus 100 performs the determination processing of determining the operation amount regarding the operation by the respiration of the user U1 using the acquired respiration information.

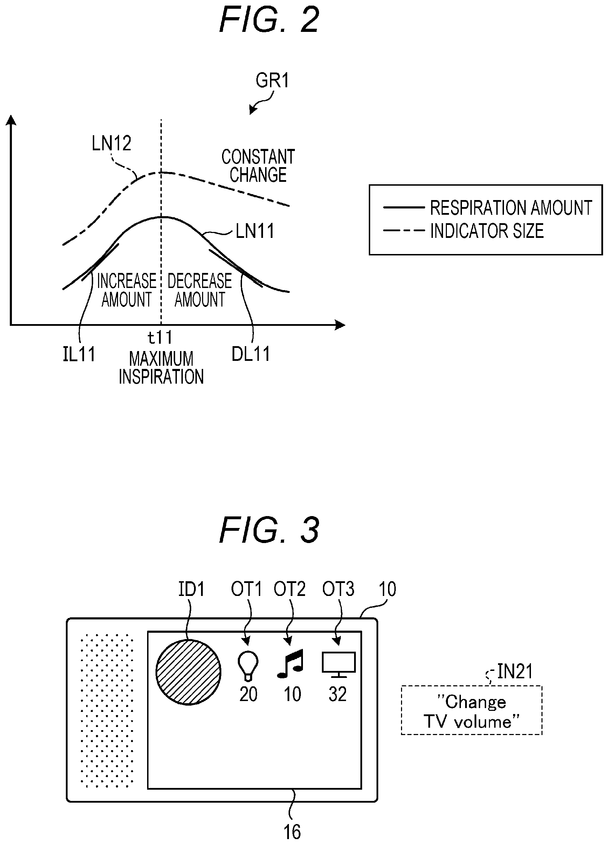

Hereinafter, the above-described determination processing performed by the information processing apparatus 100 will be specifically described with reference to Fig. 2. Fig. 2 is a diagram illustrating an example of reflection of the respiration of the user on the operation amount.

A graph GR1 in Fig. 2 is a graph illustrating a relationship between the respiration of the user and the operation amount. Specifically, the graph GR1 in Fig. 2 is a graph illustrating a relationship between the inspiration amount of the user and the size of the indicator (indicator size) on the basis of the operation amount. In the graph GR1 in Fig. 2, a vertical axis represents the inspiration amount and the size of the indicator, and a horizontal axis represents a time. Furthermore, in the graph GR1 in Fig. 2, a line (line LN 11) indicating a respiration amount is indicated by a solid line, and a line (line LN 12) indicating the indicator size is indicated by a one-dot chain line.

Furthermore, each value used in the following description will be described. A current inspiration amount "B_current" indicates the inspiration amount of the user at the current time point. For example, the current inspiration amount "B_current" indicates the latest inspiration amount of the user acquired at the time of the determination processing. A maximum inspiration amount "B_max" indicates the maximum inspiration amount that can be reached in one respiration. The maximum inspiration amount "B_max" indicates the maximum inspiration amount reached between one continuous inspiration and one continuous expiration.

An inspiration increase amount "B_increase" indicates an increase amount of the inspiration at the time of the inspiration. That is, the inspiration increase amount "B_increase" indicates a change amount (increase amount) of the inspiration amount at the time of the inspiration. Note that the inspiration increase amount "B_increase" may be information indicating a ratio of the increase amount of the inspiration amount with respect to lapse of time (increase amount). For example, the inspiration increase amount "B_increase" may be an inclination (change rate). An increase amount threshold "B_increase_thres" indicates a threshold used for comparison with the inspiration increase amount. The expiration increase amount "B_decrease" indicates an increase amount of expiration at the time of expiration. That is, the expiration increase amount "B_decrease" indicates a change amount (decrease amount) of the inspiration amount at the time of the expiration. Note that the expiration increase amount "B_decrease" may be information indicating a ratio of the decrease amount of the inspiration amount with respect to the lapse of time (increase amount). For example, the expiration increase amount "B_decrease" may be an inclination (change rate). An expiration amount threshold "B_decrease_thres" indicates a threshold used for comparison with the expiration increase amount.

An indicator parameter "P_indicator" indicates a parameter of the indicator. The indicator parameter "P_indicator" indicates the size of the indicator. The indicator parameter "P_indicator" may indicate the operation amount. Hereinafter, the indicator parameter "P_indicator" will be described as indicating the operation amount. A time variable "Time" indicates a value on the basis of a time. The time variable "Time" indicates a value that changes with the lapse of time from the time point of the maximum inspiration amount "B_max". For example, the time variable "Time" has a larger value as the difference from the time point of the maximum inspiration amount "B_max" is larger.

The indicator parameter "P_indicator" increases until maximum inspiration is reached. In the example of Fig. 2, the indicator parameter "P_indicator" increases in proportion to the inspiration amount until a time t11 when the maximum inspiration amount "B_max" is reached.

For example, the information processing apparatus 100 calculates the indicator parameter "P_indicator" indicating the operation amount using the current inspiration amount "B_current" and the following Formula (1) until the maximum inspiration. For example, the information processing apparatus 100 calculates the indicator parameter "P_indicator" indicating the operation amount using Formula (1) while the user performs inspiration.

[Mathematical formula 1]

$$\text{if B\_increase} < \text{B\_increase\_thres:}$$
$$\text{P\_indicator} = a * \text{B\_current} + b \qquad \cdots (1)$$

"a" and "b" in the above Formula (1) represent predetermined constants. In this manner, the information processing apparatus 100 increases the operation amount in proportion to the inspiration amount at the time of the inspiration. The information processing system 1 increases the operation amount in proportion to the inspiration amount at the time of the inspiration. Therefore, the information processing system 1 increases the indicator size in proportion to the inspiration amount at the time of the inspiration. Note that after calculating the indicator parameter "P_indicator" indicating the operation amount, the information processing apparatus 100 may determine the indicator size by using the value of the indicator parameter "P_indicator" and a predetermined conversion formula.

Note that the above Formula (1) is an example of calculation of the indicator parameter "P_indicator" in a case where the inspiration increase amount "B_increase" is less than the increase amount threshold "B_increase_thres" until the maximum inspiration, and various expressions may be used for calculation of the indicator parameter "P_indicator". For example, in a case where the inspiration increase amount "B_increase" is equal to or larger than the increase amount threshold "B_increase_thres", another calculation formula (the following Formula (3)) is used, and this point will be described later in detail.

Note that which one of the cases equal to the threshold is included may be appropriately set. The information processing apparatus 100 may use the above Formula (1) in a case where the inspiration increase amount "B_increase" is equal to or less than the increase amount threshold "B_increase _thres", and use the following Formula (3) in a case where the inspiration increase amount "B_increase" is larger than the increase amount threshold "B_increase_thres".

Furthermore, the indicator parameter "P_indicator" changes constantly after the maximum inspiration. In the example of Fig. 2, the indicator parameter "P_indicator" decreases constantly with the lapse of time after the time t11 when the maximum inspiration amount "B_max" is reached.

For example, the information processing apparatus 100 calculates the indicator parameter "P_indicator" indicating the operation amount by using the maximum inspiration amount "B_max", the time variable "Time", and the following Formula (2) after the maximum inspiration. For example, while the user performs expiration, the information processing apparatus 100 calculates the indicator parameter "P_indicator" indicating the operation amount using Formula (2).

[Mathematical formula 2]

$$\text{if B\_decrease\_thres} < \text{B\_decrease:}$$
$$\text{P\_indicator} = \text{B\_max} - c * \text{Time} \qquad \cdots (2)$$

"c" in the above Formula (2) represents a predetermined constant. In this manner, the information processing apparatus 100 decreases the operation amount to be constant at the time of the expiration and increases the operation amount in proportion to the inspiration amount at the time of the inspiration. The information processing system 1 decreases the indicator size to be constant at the time of the expiration.

Note that Formula (2) described above is an example of calculation of the indicator parameter "P_indicator" in a case where the expiration increase amount "B_decrease" is larger than the expiration amount threshold "B_decrease_thres" after the maximum inspiration. Various expressions may be used for calculation of the indicator parameter "P_indicator". For example, in a case where the expiration increase amount "B_decrease" is equal to or less than the expiration amount threshold "B_decrease_thres", another calculation formula (the following Formula (6)) is used, and this point will be described later in detail.

Note that which one of the cases equal to the threshold is included may be appropriately set. The information processing apparatus 100 may use the above Formula (2) in a case where the expiration increase amount "B_decrease" is equal to or larger than the expiration amount threshold "B_decrease_thres", and use the following Formula (6) in a case where the expiration increase amount "B_decrease" is less than the expiration amount threshold "B_decrease _thres".

The information processing apparatus 100 calculates the operation amount (indicator parameter) by the above-described processing, thereby determining the operation amount regarding the operation by the user U1. In this manner, the information processing apparatus 100 can appropriately calculate the operation amount by determining the operation amount using the respiration information of the user.

Note that the processing using Formulas (1) and (2) described above is an example, and the information processing apparatus 100 may perform the determination processing by various methods without being limited to the processing described above. For example, the information processing apparatus 100 may perform the determination processing using a technology regarding machine learning. In this case, the information processing apparatus 100 may perform the determination processing using a model that outputs the operation amount in a case where the respiration information is input. The information processing apparatus 100 may learn the relationship between the respiration amount and the operation amount indicated by the respiration information, and perform the determination processing using the model that outputs the operation amount corresponding to the respiration amount according to the input of the respiration amount. For example, the information processing apparatus 100 may learn a model by using learning data including a combination of respiration information indicating a respiration amount of the user and an operation amount corresponding to the respiration amount, or may acquire the model from an external information processing apparatus.

Returning to Fig. 1, the description will be continued. The information processing system 1 changes the size of the indicator ID1 displayed on the terminal device 10 using the operation amount (indicator parameter) determined by the information processing apparatus 100 (Step S13). For example, the information processing apparatus 100 transmits information of the determined operation amount (indicator parameter) to the terminal device 10. The terminal device 10 that has received the information of the operation amount (indicator parameter) from the information processing apparatus 100 changes the size of the displayed indicator ID1.

In the example of Fig. 1, terminal device 10 changes the display of indicator ID 1 from terminal device 10-1 to terminal device 10-2. The terminal device 10 changes the display from the indicator ID1-1 in an initial state to the indicator ID1-2 having an enlarged size by using the operation amount (indicator parameter) received from the information processing apparatus 100. Therefore, the indicator ID1 whose size has been changed is displayed on the display unit 16 of the terminal device 10 from the indicator ID1-1 to the indicator ID1-2 as illustrated in the terminal device 10-2. In this manner, a display mode of the indicator ID1 changes according to the inspiration amount of the user U1. Therefore, the information processing system 1 can display an inspiration guide user interface (UI) serving as a guide of the amount.

Note that the information processing apparatus 100 may transmit the content (corresponding to the display screen of the terminal device 10-2) in which the size of the indicator ID1 has been changed to the terminal device 10, and the terminal device 10 may display the received content.

Then, the user U1 makes an utterance (Step S14). For example, the user U1 performs voice input requesting the terminal device 10 to perform processing using the operation amount indicated by the indicator ID1. In the example of Fig. 1, the user U1 utters "Turn up volume" as illustrated in utterance information IN11, and performs voice input requesting the terminal device 10 to perform an operation of increasing the volume of the device. For example, the user U1 utters "Turn up volume" and performs the voice input requesting an operation of increasing the volume of the terminal device 10.

Then, the information processing system 1 performs processing using the input by the utterance of the user U1 and the operation amount (Step S15). The information processing system 1 performs processing of the voice interaction system on the input by the user U1. For example, the information processing system 1 interprets an input of the user by natural language understanding (NLU) and executes corresponding processing (Action). The information processing apparatus 100 or the terminal device 10 interprets the input of the user by the natural language understanding (NLU) and executes the corresponding processing (Action).

In the example of Fig. 1, the terminal device 10 performs processing of increasing the volume using the utterance information IN11 and the operation amount. The terminal device 10 performs processing of increasing the volume by the size of the indicator ID1-2 by the operation amount. The terminal device 10 performs the processing of increasing the volume as illustrated in the terminal device 10-3. Therefore, the information processing system 1 enables an amount change according to the inspiration amount of the user. On the display unit 16 of the terminal device 10, as illustrated in the terminal device 10-3, information corresponding to the processing of increasing the volume is displayed.

As described above, the information processing system 1 determines the operation amount by using the respiration of the user and uses the operation amount for processing corresponding to the operation performed by the user, and thus, it is possible to save the user from having to input the operation amount by voice and the like, and it is possible to reduce the operation load of the user. Note that, in the above-described example, the case where the inspiration of the user is associated with the increase in the operation amount and the indicator size, and the expiration of the user is associated with the decrease in the operation amount and the indicator size has been described. However, the association between the inspiration of the user and the operation amount and the indicator size is not limited thereto. The information processing system 1 may associate the inspiration of the user with a decrease in the operation amount or the indicator size, and may associate the expiration of the user with an increase in the operation amount or the indicator size. In this case, the information processing system 1 may decrease the operation amount and the indicator size at the time of the inspiration of the user and increase the operation amount and the indicator size at the time of the expiration of the user. The information processing system 1 may decrease the operation amount and the indicator size according to an increase in the inspiration amount of the user, and increase the operation amount and the indicator size according to a decrease in the inspiration amount of the user.

[1-1-1. Background, effects, and the like]

In the existing voice UI, in a case where amount adjustment, position adjustment, and the like are performed as desired by the user, it is necessary for the user to include specific information that can be understood by the system in the utterance. Therefore, the utterance of the user becomes long, and an utterance load is large. For example, in the existing voice UI, it is necessary for the user to include the operation amount such as a specific numerical value in the utterance, such as "set the volume to 50" or "move to the left by 3 cm", and the utterance becomes longer and the utterance load becomes larger.

Meanwhile, the information processing system 1 determines the operation amount regarding an operation by the user on the basis of the respiration of the user. Therefore, the information processing system 1 can omit time and effort for the user to input information indicating an operation amount such as a specific numerical value by utterance. Therefore, the information processing system 1 can reduce the operation load of the user and improve usability. In the example of Fig. 1, the information processing system 1 uses the respiration state before utterance as a parameter associated with voice operation, and enables the user to perform an expected operation without including specific numerical information in the utterance. Such an information processing system 1 can determine the operation amount at the time of the inspiration and determine the processing content such as the operation target on the basis of the command utterance, for example, in a case where the user performs inspiration largely and then utters a command after a while. For example, the information processing system 1 can appropriately determine the operation amount regarding the operation by the user by using the respiration information such as a respiration state, an inhalation amount of breath, an increase amount of an inhalation amount, the expiration amount of the breath, and the increase amount of the expiration amount.

[1-1-2. Display example on the basis of operation amount]

Note that the display on the basis of the operation amount is not limited to the example illustrated in Fig. 1, and may be in various modes. This point will be described with reference to Figs. 3 and 4. Figs. 3 and 4 are diagrams illustrating an example of display on the basis of the operation amount.

[1-1-2-1. Absolute value display example]

First, a case where the operation amount is displayed as an absolute value will be described with reference to Fig. 3. For example, the terminal device 10 may display an object corresponding to a device 50 that is a candidate for the operation target (operation target candidate) and an operation amount corresponding to the device 50 as absolute values together with the indicator ID1. In the example of Fig. 3, the terminal device 10 displays objects OB1, OB2, and OB3 respectively corresponding to three devices of a lighting device, a music player, and a television as the devices 50 that are operation target candidates. The object OB1 corresponds to a lighting device, the object OB2 corresponds to a music player, and the object OB3 corresponds to a television. For example, the terminal device 10 displays the operation amount with an absolute value within a range from a lower limit value to an upper limit value of a settable value of each operation target.

On the display unit 16 of the terminal device 10, "20" indicating the operation amount as an absolute value is displayed below the object OB1 corresponding to the lighting device. In this case, in a case where the lighting device is selected as the operation target, for example, it is indicated that brightness of the lighting device is set to "20".

On the display unit 16 of the terminal device 10, "10" indicating the operation amount as an absolute value is displayed below the object OB2 corresponding to the music player. In this case, in a case where the music player is selected as the operation target, for example, it is indicated that a volume of the music player is set to "10".

On the display unit 16 of the terminal device 10, "32" indicating the operation amount as an absolute value is displayed below the object OB3 corresponding to the television. In this case, in a case where the television is selected as the operation target, for example, it is indicated that a volume of the television is set to "32".

As described above, in the example of Fig. 3, the terminal device 10 displays the operation amount for each operation target as an absolute value. For example, the user utters "Change TV volume" as illustrated in the utterance information IN21, and performs voice input requesting the information processing system 1 to perform an operation of changing the volume of the television. The information processing system 1 performs processing of changing the volume of the television using the utterance information IN21 and the operation amount. Specifically, the information processing system 1 performs processing for changing the volume of the television to "32" using the utterance information IN21 and the operation amount.

[1-1-2-2. Display example of relative value]

First, a case where the operation amount is displayed as a relative value will be described with reference to Fig. 4. Note that descriptions of points similar to those in Fig. 3 will be omitted as appropriate. For example, the terminal device 10 may display an object corresponding to the device 50 that is a candidate for the operation target (operation target candidate) and an operation amount corresponding to the device 50 as relative values together with the indicator ID1. The terminal device 10 may display the operation amount as a relative value indicating how much to change from the current value. For example, the terminal device 10 may display the operation amount as the change amount from the current value. For example, the terminal device 10 displays a relative value of the operation amount within a range from the lower limit value to the upper limit value of the settable value of each operation target.

On the display unit 16 of the terminal device 10, "5" indicating the operation amount as a relative value is displayed below the object OB1 corresponding to the lighting device. In this case, in a case where the lighting device is selected as the operation target, for example, the brightness of the lighting device is changed by "5".

On the display unit 16 of the terminal device 10, "10" indicating the operation amount as a relative value is displayed below the object OB2 corresponding to the music player. In this case, in a case where the music player is selected as the operation target, for example, it is indicated that the volume of the music player is changed by "10".

On the display unit 16 of the terminal device 10, "20" indicating the operation amount as a relative value is displayed below the object OB3 corresponding to the television. In this case, in a case where the television is selected as the operation target, for example, it is indicated that the volume of the television is changed by "20".

As described above, in the example of Fig. 4, the terminal device 10 displays the operation amount for each operation target as a relative value. In a case where the relative value is displayed in this manner, the rising and the falling are determined from the utterance command. That is, in the case of relative value display, the information processing system 1 determines whether the parameter (setting value) rises (increases) or falls (decreases) on the basis of the utterance of the user.

For example, in a case where the user utters "Turn up TV volume" as indicated in the utterance information IN31, the information processing system 1 determines that a voice input requesting an operation to increase the volume of the television has been performed. The information processing system 1 performs processing of increasing the volume of the television by using the utterance information IN31 and the operation amount. Specifically, the information processing system 1 performs processing of increasing the volume of the television by "20" using the utterance information IN31 and the operation amount.

Furthermore, for example, in a case where the user utters "Turn down music" as indicated in the utterance information IN32, the information processing system 1 determines that a voice input requesting an operation of reducing the volume of the music player has been performed. The information processing system 1 performs processing of lowering the volume of the music player by using the utterance information IN32 and the operation amount. Specifically, the information processing system 1 performs processing of reducing the volume of the music player by "10" using the utterance information IN32 and the operation amount.

Note that the absolute value display and the relative value display described above are examples, and the information processing system 1 may determine which one to use from the utterance command without limiting the use as the absolute value or the relative value when the indicator is displayed.

[1-1-3. Determination of object using utterance before respiration]

In the example of Fig. 1, the processing is performed in the order of the determination of the operation amount and the determination of the operation target, but the information processing system 1 may perform the processing in the order of the determination of the operation target and the determination of the operation amount.

For example, after determining the operation target on the basis of the utterance of the user, the information processing apparatus 100 may determine the operation amount regarding the operation by the user on the basis of the subsequent respiration of the user. In this case, the information processing system 1 may change the parameter of the operation target in real time according to the operation amount by respiration of the user. For example, in a case where (the parameter of) the brightness of the lighting device is determined as the operation target, the information processing system 1 may change the brightness of the lighting device in real time according to the operation amount by respiration of the user. Therefore, the information processing system 1 can allow the user to intuitively grasp the change by the operation by respiration of the user.

[1-1-4. Sensor example]

In the example of Fig. 1, the case where the millimeter wave radar is used as an example of the respiration sensor 171 that detects the respiration information indicating the respiration of the user has been described, but the respiration sensor 171 is not limited to the millimeter wave radar and may be any sensor as long as the respiration information of the user can be detected. This point will be described below by way of example.

[1-1-4-1. Contact type]

In the example of Fig. 1, the detection of the respiration information using the respiration sensor 171 using the millimeter wave radar, that is, the non-contact type sensor has been described as an example, but the sensor used for the detection (acquisition) of the respiration information is not limited to the non-contact type, and may be the contact type. Hereinafter, an example of a contact type sensor will be described.

The respiration sensor 171 may be a wearable sensor. As the respiration sensor 171, a contact type sensor of various modes such as a band type, a jacket type, and a mask type may be used.

In a case where a band-type sensor is used as the respiration sensor 171, the information processing system 1 acquires a displacement amount of the respiration from expansion and contraction of a band wound around the chest or abdomen of the user. In a case where a jacket type sensor is used as the respiration sensor 171, the information processing system 1 embeds a band in a jacket worn by the user. Furthermore, it is possible to improve the accuracy of the respiration detection by providing sensors at a plurality of positions (directions).

Furthermore, in a case where an acceleration sensor is used as the respiration sensor 171, the information processing system 1 may observe the movement of the chest by an acceleration sensor mounted on a wearable device such as a neck hanging device or a smartphone worn on the upper body of the user to estimate the respiration amount. Furthermore, in a case where a mask-type sensor is used as the respiration sensor 171, the information processing system 1 detects the speeds of exhalation and inspiration by an air volume sensor or an atmospheric pressure sensor mounted on the mask, and estimates a depth and a cycle from the accumulated displacement amount.

Furthermore, a virtual reality (VR) headset that covers the mouth of the user may be used as the respiration sensor 171. In this case, since VR is being used, a disadvantage in the real world can be ignored by the respiration sensor 171 that performs respiration sensing with a noise cut-off microphone. Furthermore, in a case where a proximity microphone is used for the respiration sensor 171, the information processing system 1 recognizes the sound of the breath discharged by the proximity microphone, recognizes a temporal change amount of the exhalation, and estimates the depth and speed of the respiration. For example, the information processing system 1 recognizes the sound of noise generated when the microphone is hit by the breath discharged by the proximity microphone, recognizes the temporal change amount of the exhalation, and estimates the depth and speed of the respiration.

[1-1-4-2. Non-contact type]

Furthermore, the non-contact sensor is not limited to the millimeter wave radar, and various non-contact sensors may be used as the respiration sensor 171. Hereinafter, examples of non-contact sensors other than the millimeter wave radar will be described.

As the respiration sensor 171, a method of image sensing, a method of respiration detection from the temperature around the nose, a proximity sensor, and a radar other than a millimeter wave radar may be used.

In a case where the image sensing is used for the respiration sensor 171, the information processing system 1 recognizes temporal change amounts of exhalation and inspiration at different temperatures with a thermo camera, and estimates the depth, cycle, and speed of the respiration. Furthermore, the information processing system 1 may perform image sensing on the breath that becomes white in cold weather, recognize the temporal change amount of the exhalation, and estimate the depth, period, and speed of the respiration.

For example, regarding a method of detecting respiration from the temperature around the nose, the following disclosure is disclosed.

- Brief respiration sensing method

<https://shingi.jst.go.jp/past_abst/abst/p/09/919/t ama2.pdf>

For example, regarding the respiration detection using the proximity sensor, the following disclosure is disclosed.

- Capacitive film proximity sensor for monitoring movement and respiration of person

<https://www.aist.go.jp/aist_j/press_release/pr2016 /pr20160125/pr20160125.html>

For example, the following disclosure is disclosed regarding respiration detection using a radar.

- Heart rate/respiration detection sensor "GZS-350 series"

<https://www.ipros.jp/product/detail/2000348329/>

Furthermore, in a case where the millimeter wave radar is used as the respiration sensor 171 as illustrated in Fig. 1, information processing system 1 detects the movement of the chest of the user using the phase difference of the reception signal of the millimeter wave radar, and estimates the respiration amount. For example, the terminal device 10 detects the movement of the chest of the user by the phase difference of the reception signal of the millimeter wave radar using the sensor information detected by the respiration sensor 171, and estimates the respiration amount to generate the respiration information of the user. Then, the terminal device 10 transmits the generated respiration information of the user to the information processing apparatus 100.

Furthermore, the information processing apparatus 100 may generate the respiration information of the user. In this case, the terminal device 10 transmits the sensor information detected by the respiration sensor 171 to the information processing apparatus 100. Then, using the sensor information received by the information processing apparatus 100 that has received the sensor information, the movement of the chest of the user may be detected by the phase difference of the reception signal of the millimeter wave radar, and the respiration amount may be estimated to generate the respiration information of the user.

Note that the above-described sensor is merely an example of a sensor used for acquiring the respiration information, and any sensor may be used as long as the respiration information can be acquired. The information processing system 1 may detect the respiration information using any sensor as long as the respiration information indicating the respiration of the user can be detected.

A sensor unit 17 of the terminal device 10 includes at least one of the above-described sensors, and detects respiration information by the sensor. Note that the information processing system 1 may generate the respiration information by using the sensor information detected by a sensor of the sensor unit 17. For example, the terminal device 10 or information processing apparatus 100 may generate the respiration information by using the sensor information (point cloud data) detected by a respiration sensor 171 (millimeter wave radar). In this case, the terminal device 10 and the information processing apparatus 100 may generate the respiration information from the sensor information (point cloud data) detected by the respiration sensor 171 (millimeter wave radar) by appropriately using various technologies.

[1-2. Configuration of information processing system according to embodiment]

The information processing system 1 illustrated in Fig. 5 will be described. As illustrated in Fig. 5, the information processing system 1 includes the terminal device 10, an information processing apparatus 100, and a plurality of devices 50-1, 50-2, and 50-3. Hereinafter, the devices 50-1 to 50-3 and the like may be referred to as a device 50 in a case where the devices are not distinguished from each other. Note that, although three devices 50-1, 50-2, and 50-3 are illustrated in Fig. 5, the information processing system 1 may include more than three (for example, 20 or 100 or more) devices 50. The terminal device 10, the information processing apparatus 100, and the device 50 are communicably connected in a wired or wireless manner via a predetermined communication network (network N). Fig. 5 is a diagram illustrating a configuration example of the information processing system according to one embodiment. Note that the information processing system 1 illustrated in Fig. 5 may include a plurality of terminal devices 10 and a plurality of information processing apparatuses 100.

The information processing apparatus 100 is a computer that predicts whether or not the user utters after the inspiration of the user on the basis of the respiration information indicating the respiration of the user. The information processing apparatus 100 classifies inspiration of the user on the basis of the respiration information of the user. Furthermore, the information processing apparatus 100 is a computer that transmits various types of information to the terminal device 10. The information processing apparatus 100 is a server apparatus used to provide services regarding various functions.

Furthermore, the information processing apparatus 100 may include software modules such as voice signal processing, voice recognition, utterance semantic analysis, and interaction control. The information processing apparatus 100 may have a function of voice recognition. For example, the information processing apparatus 100 may have functions of natural language understanding (NLU) and automatic speech recognition (ASR). For example, the information processing apparatus 100 may estimate information regarding the intent and entity (target) of the user from the input information by the utterance of the user. The information processing apparatus 100 functions as a voice recognition server having functions of the natural language understanding and automatic voice recognition.

The terminal device 10 is a terminal device that detects the respiration information indicating the respiration of the user by a sensor. For example, the terminal device 10 detects the respiration information indicating the respiration of the user by the respiration sensor 171. The terminal device 10 is an information processing apparatus that transmits the respiration information of the user to a server apparatus such as the information processing apparatus 100. Furthermore, the terminal device 10 may have a function of the voice recognition such as the natural language understanding and automatic voice recognition. For example, the terminal device 10 may estimate information regarding the intent and entity (target) of the user from the input information by the utterance of the user.

The terminal device 10 is a device used by a user. The terminal device 10 receives an input by the user. The terminal device 10 receives a voice input by the utterance of the user or an input by the operation of the user. The terminal device 10 displays information according to the input of the user. The terminal device 10 may be any device as long as the processing in one embodiment can be achieved. The terminal device 10 may be any device as long as it has a function of detecting the respiration information of the user and transmitting the respiration information to the information processing apparatus 100. For example, the terminal device 10 may be a device such as a smartphone, a smart speaker, a television, a tablet terminal, a notebook personal computer (PC), a desktop PC, a mobile phone, or a personal digital assistant (PDA). The terminal device 10 may be a wearable terminal (Wearable Device) and the like worn by the user. For example, the terminal device 10 may be a wristwatch-type terminal, a glasses-type terminal, and the like.

The device 50 is various devices used by a user. The device 50 is various devices such as Internet of Things (IoT) devices. The device 50 is an IoT device such as a home appliance. For example, the device 50 may be any device as long as the device has a communication function, communicates with the information processing apparatus 100 and the terminal device 10, and can perform processing in response to an operation request from the information processing apparatus 100 and the terminal device 10. For example, the device 50 may be a so-called home appliance such as a lighting fixture (lighting device), a music player, a television, a radio, an air conditioner (air conditioning device), a washing machine, or a refrigerator, or may be a product installed in a house such as a ventilator or floor heating. In the example of Fig. 5, the device 50-1 may be a lighting device, the device 50-2 may be a music player, and the device 50-3 may be a television.

Furthermore, the device 50 may be, for example, an information processing apparatus such as a smartphone, a tablet terminal, a notebook PC, a desktop PC, a mobile phone, or a PDA. Furthermore, for example, the device 50 may be any device as long as the processing in one embodiment can be achieved. Note that the device 50 may include a terminal device 10. That is, the device to be operated using the operation amount on the basis of the respiration of the user may be the terminal device 10.

[1-3. Configuration of information processing apparatus according to embodiment]

Next, a configuration of the information processing apparatus 100 that is an example of an information processing apparatus that executes information processing according to one embodiment will be described. Fig. 6 is a diagram illustrating a configuration example of the information processing apparatus 100 according to one embodiment of the present disclosure.

As illustrated in Fig. 6, the information processing apparatus 100 includes a communication unit 110, a storage unit 120, and a control unit 130. Note that the information processing apparatus 100 may include an input unit (for example, a keyboard, a mouse, and the like) that receives various operations from an administrator and the like of the information processing apparatus 100, and a display unit (for example, a liquid crystal display and the like) for displaying various types of information.

The communication unit 110 is achieved by, for example, a network interface card (NIC) and the like. Then, the communication unit 110 is connected to a network N (see Fig. 5) in a wired or wireless manner, and transmits and receives information to and from another information processing apparatus such as the terminal device 10. Furthermore, the communication unit 110 may transmit and receive information to and from a user terminal (not illustrated) used by the user.

The storage unit 120 is achieved by, for example, a semiconductor memory element such as a random access memory (RAM) or a flash memory, or a storage device such as a hard disk or an optical disk. As illustrated in Fig. 6, the storage unit 120 according to one embodiment includes a respiration information storage unit 121, a user information storage unit 122, a threshold information storage unit 123, and a function information storage unit 124.

The storage unit 120 stores various types of information in addition to the above. The storage unit 120 stores information of a voice recognition application (program) that achieves a voice recognition function. For example, the information processing apparatus 100 can execute voice recognition by activating a voice recognition application (also simply referred to as "voice recognition"). The storage unit 120 stores various types of information used for voice recognition. The storage unit 120 stores information of a dictionary (voice recognition dictionary) used for the voice recognition dictionary. The storage unit 120 stores information on a plurality of voice recognition dictionaries. The storage unit 120 stores information such as a long sentence voice recognition dictionary (long sentence dictionary), a middle sentence voice recognition dictionary (middle sentence dictionary), and a short sentence voice recognition dictionary (word/phrase dictionary).

The respiration information storage unit 121 according to one exemplary embodiment stores various types of information regarding the respiration of the user. The respiration information storage unit 121 stores various kinds of information such as the respiration information of each user in association with identification information (user ID) of each user. The respiration information storage unit 121 stores the respiration information indicating the respiration of the user. The respiration information storage unit 121 stores the respiration information including the inspiration amount of the user. The respiration information storage unit 121 stores the respiration information including the change amount of the respiration of the user. The respiration information storage unit 121 stores the utterance information indicating the utterance by the user after the respiration of the user. The respiration information storage unit 121 stores the utterance information indicating the utterance by the user before the respiration of the user.

Note that the respiration information storage unit 121 is not limited to the above, and may store various types of information according to a purpose. For example, the respiration information storage unit 121 may store various types of information necessary for generating the graphs GR1 to GR6. For example, the respiration information storage unit 121 may store various types of information illustrated in the graphs GR1 to GR6.

The user information storage unit 122 according to one embodiment stores various types of information regarding the user. For example, the user information storage unit 122 stores various types of information such as attribute information of each user.

The user information storage unit 122 stores information regarding the user such as a user ID, an age, a gender, and a residential place. For example, the user information storage unit 122 stores information related to the user U1 such as the age, gender, and residential place of the user U1 associated with a user ID "U1" for identifying the user U1.

Furthermore, the user information storage unit 122 stores information for identifying a device (a television, a smartphone, and the like) used by each user in association with the user. The user information storage unit 122 stores information (terminal ID and the like) for identifying the terminal device 10 used by each user in association with the user.

Note that the user information storage unit 122 is not limited to the above, and may store various types of information according to the purpose. For example, the user information storage unit 122 may store not only age and gender but also other demographic attribute information and psychographic attribute information. For example, the user information storage unit 122 may store information such as a name, a home, a work place, an interest, a family structure, a revenue, and a lifestyle.

The threshold information storage unit 123 according to one embodiment stores various types of information regarding the threshold. The threshold information storage unit 123 stores various types of information regarding the threshold used for determining the operation amount. Fig. 7 is a diagram illustrating an example of a threshold information storage unit according to one embodiment; The threshold information storage unit 123 illustrated in Fig. 7 includes items such as "threshold ID", "use", "threshold name", and "value".

The "threshold ID" indicates identification information for identifying the threshold. The "use" indicates an application of the threshold. The "threshold name" indicates a name (character string) of a threshold (variable) used as a threshold identified by the corresponding threshold ID. The "value" indicates a specific value of the threshold identified by the corresponding threshold ID.

The example of Fig. 7 indicates that the use of the threshold (threshold TH1) identified by the threshold ID "TH1" is a threshold used for comparison with the increase amount (of inspiration). The threshold TH1 indicates that it is used as a threshold name "B_increase_thres". The value of the threshold TH1 indicates "VL1". Note that, in Fig. 7, the value is indicated by an abstract code such as "VL1", but the value is a specific numerical value such as "0.5" or "1.8".

Furthermore, in the example of Fig. 7, the use of the threshold (threshold TH2) identified by the threshold ID "TH2" is a threshold used for comparison with the increase amount (expiration increase amount) of the expiration. The threshold TH2 indicates that the threshold is used as the threshold name "B_decrease_thres". The value of the threshold TH2 indicates "VL2". Note that, in Fig. 7, the value is indicated by an abstract code such as "VL2", but the value is a specific numerical value such as "-0.3" or "-2.5".

Note that, although only the thresholds TH1 and TH2 used for determining the operation amount are illustrated in Fig. 7, the threshold information storage unit 123 may also store a threshold used for switching between display and non-display of the indicator. Furthermore, the threshold information storage unit 123 is not limited to the above, and may store various types of information according to the purpose.

The function information storage unit 124 according to one embodiment stores various types of information regarding functions. The function information storage unit 124 stores information regarding each function executed in response to the input of the user. The function information storage unit 124 stores information regarding an input necessary for execution of a function. The function information storage unit 124 stores input items necessary for execution of each function.

Furthermore, the function information storage unit 124 may store various types of information regarding the device. The function information storage unit 124 stores various types of information regarding a device corresponding to each function. For example, the function information storage unit 124 can communicate with the information processing apparatus 100 and stores various types of information of a device that can be an operation target. The function information storage unit 124 may store a device ID indicating identification information for identifying a device and device type information indicating a type of a corresponding device. The function information storage unit 124 stores functions and parameters of each device in association with each device. The function information storage unit 124 stores information indicating a state of each device in association with each device. For example, the function information storage unit 124

13

stores various types of information such as a parameter value of each device at that time point in association with each device. For example, the function information storage unit 124 stores various types of information such as a parameter value of each device at the current time point (the last time information is acquired) in association with each device. In a case where the device is a television, the function information storage unit 124 stores an on/off state, a volume, brightness, a channel, and the like at the current time point in association with the device ID. Furthermore, in a case where the device is a lighting fixture, the function information storage unit 124 stores an on/off state, brightness, a color tone, and the like at the current time point in association with the device ID.

Note that the function information storage unit 124 is not limited to the above, and may store various types of information depending on the purpose.

Returning to Fig. 6, the description will be continued. The control unit 130 is implemented by, for example, a central processing unit (CPU), a micro processing unit (MPU), and the like executing a program (for example, an information processing program and the like according to the present disclosure) stored inside the information processing apparatus 100 with a random access memory (RAM) and the like as a work area. Furthermore, the control unit 130 is achieved by, for example, an integrated circuit such as an application specific integrated circuit (ASIC) or a field programmable gate array (FPGA).

As illustrated in Fig. 6, the control unit 130 includes an acquisition unit 131, a prediction unit 132, a determination unit 133, an execution unit 134, and a transmission unit 135, and implements or executes a function and an action of information processing described below. Note that the internal configuration of the control unit 130 is not limited to the configuration illustrated in Fig. 6, and may be another configuration as long as information processing to be described later is performed. Furthermore, a connection relationship among the processing units included in the control unit 130 is not limited to the connection relationship illustrated in Fig. 6, and may be another connection relationship.

The acquisition unit 131 acquires various types of information. The acquisition unit 131 acquires various types of information from an external information processing apparatus. The acquisition unit 131 acquires various types of information from the terminal device 10. The acquisition unit 131 acquires various types of information detected by the sensor unit 17 of the terminal device 10 from the terminal device 10. The acquisition unit 131 acquires the information detected by the respiration sensor 171 of the sensor unit 17 from the terminal device 10.

The acquisition unit 131 acquires various types of information from the storage unit 120. The acquisition unit 131 acquires various types of information from the respiration information storage unit 121, the user information storage unit 122, the threshold information storage unit 123, and the function information storage unit 124. The acquisition unit 131 acquires various types of information predicted by the prediction unit 132. The acquisition unit 131 acquires various types of information determined by the determination unit 133.

The acquisition unit 131 acquires the respiration information indicating the respiration of the user. The acquisition unit 131 acquires the respiration information including the inspiration amount of the user. The acquisition unit 131 acquires the respiration information including the respiration change amount of the user. The acquisition unit 131 acquires the utterance information indicating the utterance by the user after the respiration of the user. The acquisition unit 131 acquires the utterance information indicating the utterance by the user before the respiration of the user. The acquisition unit 131 acquires the respiration information indicating the respiration of the user U1 from the terminal device 10 used by user U1.

The prediction unit 132 predicts various types of information. The prediction unit 132 classifies various types of information. The prediction unit 132 calculates various types of information. The prediction unit 132 determines various types of information. The prediction unit 132 makes various determinations. The prediction unit 132 determines various types of information. For example, the prediction unit 132 predicts various types of information on the basis of information from an external information processing apparatus or information stored in the storage unit 120. The prediction unit 132 predicts various types of information on the basis of information from another information processing apparatus such as the terminal device 10. The prediction unit 132 predicts various types of information on the basis of information stored in the respiration information storage unit 121, the user information storage unit 122, the threshold information storage unit 123, or the function information storage unit 124. The prediction unit 132 classifies various types of information. For example, the prediction unit 132 classifies various types of information on the basis of information from an external information processing apparatus or information stored in the storage unit 120.

The prediction unit 132 predicts various types of information on the basis of the various types of information acquired by the acquisition unit 131. The prediction unit 132 predicts various types of information on the basis of the various types of information determined by the determination unit 133. The prediction unit 132 makes various determinations on the basis of the prediction. Various determinations are made on the basis of the information acquired by the acquisition unit 131. The prediction unit 132 calculates a score on the basis of the respiration information. The prediction unit 132 calculates a score used for the utterance prediction of the user on the basis of the respiration information.

The prediction unit 132 predicts the operation amount on the basis of the respiration information acquired by the acquisition unit 131. The prediction unit 132 predicts the inspiration amount of the user on the basis of the respiration information acquired by the acquisition unit 131. The prediction unit 132 predicts the operation amount (predicted operation amount) on the basis of the predicted inspiration amount (predicted inspiration amount). The prediction unit 132 calculates the predicted operation amount on the basis of the predicted inspiration amount.

The determination unit 133 determines various types of information. The determination unit 133 determines various types of information. The determination unit 133 calculates various types of information. The determination unit 133 extracts various types of information. The determination unit 133 specifies various types of information. The determination unit 133 selects various types of information. The determination unit 133 determines various types of information on the basis of information from an external information processing apparatus and information stored in the storage unit 120. The determination unit 133 determines various types of information on the basis of information from another information processing apparatus such as the terminal device 10. The determination unit 133 determines various types of information on the basis of information stored in respiration information storage unit 121, user information storage unit 122, threshold information storage unit 123, or function information storage unit 124.

The determination unit 133 determines various types of information on the basis of the various types of information acquired by the acquisition unit 131. The determination unit 133 determines various types of information on the basis of the various types of information predicted by the prediction unit 132. The determination unit 133 determines various types of information on the basis of the processing executed by the execution unit 134.

The determination unit 133 determines the operation amount regarding the operation by the user on the basis of the respiration of the user indicated by the respiration information acquired by acquisition unit 131. The determination unit 133 determines the operation amount according to the amount regarding the respiration of the user. The determination unit 133 determines the operation amount on the basis of the inspiration amount. The determination unit 133 determines the operation amount on the basis of the change amount. For example, the determination unit 133 calculates the indicator parameter "P_indicator" indicating the operation amount using the current inspiration amount "B_current" and the following Formula (1) until maximum inspiration. For example, after the maximum inspiration, the determination unit 133 calculates the indicator parameter "P_indicator" indicating the operation amount using the maximum inspiration amount "B_max", the time variable "Time", and the following Formula (2). For example, the determination unit 133 determines the operation amount regarding the operation by the user U1 using the calculated operation amount (indicator parameter). For example, the determination unit 133 determines the calculated operation amount (indicator parameter) as the operation amount regarding the operation by the user U1.

The determination unit 133 increases the operation amount according to any one of the inspiration and the expiration of the user. The determination unit 133 decreases the operation amount according to the other of the inspiration and the expiration of the user different from one of the inspiration and the expiration. The determination unit 133 increases the operation amount according to the inspiration of the user. The determination unit 133 increases the operation amount in accordance with an increase in the inspiration amount at the time of the inspiration by the user. In a case where a comparison result between the increase amount of the inspiration of the user and the threshold satisfies a predetermined condition, the determination unit 133 increases the operation amount according to the increase amount of the inspiration. The determination unit 133 constantly decreases the operation amount while the expiration of the user is performed.

The determination unit 133 decreases the operation amount according to the expiration of the user. The determination unit 133 decreases the operation amount according to a decrease in the inspiration amount at the time of the expiration of the user. In a case where a comparison result between the increase amount of the expiration of the user and the threshold satisfies a predetermined condition, the determination unit 133 decreases the operation amount according to the increase amount of the expiration. The determination unit 133 determines an object to be operated by the user on the basis of the utterance information.

The determination unit 133 determines an object to be operated by the user on the basis of the utterance information. The determination unit 133 determines an operation amount corresponding to the parameter of the device. The determination unit 133 determines an operation amount corresponding to a position change of a target displayed on the screen.

The execution unit 134 executes various types of processing. The execution unit 134 determines execution of various types of processing. The execution unit 134 executes various types of processing on the basis of information from an external information processing apparatus. The execution unit 134 executes various types of processing on the basis of the information stored in the storage unit 120. The execution unit 134 executes various types of processing on the basis of information stored in the respiration information storage unit 121, the user information storage unit 122, the threshold information storage unit 123, or the function information storage unit 124.

The execution unit 134 executes various types of processing on the basis of the various types of information acquired by the acquisition unit 131. The execution unit 134 executes various types of processing on the basis of various types of information predicted by the prediction unit 132. The execution unit 134 executes various types of processing on the basis of the various types of information determined by the determination unit 133.

The execution unit 134 generates various types of information. The execution unit 134 generates various types of information on the basis of information from an external information processing apparatus or information stored in the storage unit 120. The execution unit 134 generates various types of information on the basis of information from another information processing apparatus such as the terminal device 10. The execution unit 134 generates various kinds of information on the basis of information stored in the respiration information storage unit 121, the user information storage unit 122, the threshold information storage unit 123, or the function information storage unit 124.

The execution unit 134 executes processing according to the operation amount determined by the determination unit 133. The execution unit 134 executes processing according to a prediction result by the prediction unit 132.

The transmission unit 135 transmits various types of information. The transmission unit 135 transmits various types of information to an external information processing apparatus. The transmission unit 135 provides various types of information to an external information processing apparatus. For example, the transmission unit 135 transmits various types of information to another information processing apparatus such as the terminal device 10. The transmission unit 135 provides the information stored in the storage unit 120. The transmission unit 135 transmits the information stored in the storage unit 120.

The transmission unit 135 provides various types of information on the basis of information from another information processing apparatus such as the terminal device 10. The transmission unit 135 provides various types of information on the basis of the information stored in the storage unit 120. The transmission unit 135 provides various kinds of information on the basis of the information stored in the respiration information storage unit 121, the user information storage unit 122, the threshold information storage unit 123, or the function information storage unit 124.

The transmission unit 135 transmits information indicating a function to be executed by the terminal device 10 to the terminal device 10. The transmission unit 135 transmits, to the terminal device 10, information indicating the function determined to be executed by the execution unit 134. The transmission unit 135 transmits various types of information to the terminal device 10 in response to an instruction from the execution unit 134. The transmission unit 135 transmits information instructing the terminal device 10 to activate the voice recognition application.

The transmission unit 135 transmits information indicating the operation amount determined by the determination unit 133 to the terminal device 10 by sound. The transmission unit 135 transmits the predicted operation amount predicted by the prediction unit 132 to the terminal device 10.

[1-4. Configuration of terminal device according to embodiment]

Next, a configuration of the terminal device 10 which is an example of the information processing apparatus that executes the information processing according to one embodiment will be described. Fig. 8 is a diagram illustrating a configuration example of a terminal device according to one embodiment of the present disclosure.

As illustrated in Fig. 8, the terminal device 10 includes a communication unit 11, an input unit 12, an output unit 13, a storage unit 14, a control unit 15, a display unit 16, and a sensor unit 17.

The communication unit 11 is achieved by, for example, an NIC, a communication circuit, and the like. The communication unit 11 is connected to a network N (the Internet and the like) in a wired or wireless manner, and transmits and receives information to and from other devices and the like such as the information processing apparatus 100 via the network N.

The input unit 12 receives various inputs. The input unit 12 receives detection by the sensor unit 17 as an input. The input unit 12 receives an input of the respiration information indicating the respiration of the user. The input unit 12 receives an input of the respiration information detected by the sensor unit 17. The input unit 12 receives an input of the respiration information detected by the respiration sensor 171. The input unit 12 receives an input of the respiration information on the basis of the point cloud data detected by respiration sensor 171. The input unit 12 receives an input of the utterance information of the user. The input unit 12 receives the input of the respiration information of a user who performs input by a body motion. The input unit 12 receives a gesture or a line-of-sight of the user as an input.

Various operations are input from the user to the input unit 12. The input unit 12 receives a sound as an input by the sensor unit 17 having a function of detecting a sound. The input unit 12 receives, as input information, voice information detected by a microphone (sound sensor) that detects a voice. The input unit 12 receives a voice by the utterance of the user as the input information.

Furthermore, the input unit 12 may receive an operation (user operation) on the terminal device 10 used by the user as an operation input by the user. The input unit 12 may receive information regarding the operation of the user using a remote controller (remote controller) via the communication unit 11. Furthermore, the input unit 12 may include a button provided on the terminal device 10, or a keyboard or a mouse connected to the terminal device 10.

For example, the input unit 12 may have a touch panel capable of realizing functions equivalent to those of a remote controller, a keyboard, and a mouse. In this case, various types of information are input to the input unit 12 via the display unit 16. The input unit 12 receives various operations from the user via the display screen by a function of a touch panel achieved by various sensors. That is, the input unit 12 receives various operations from the user via the display unit 16 of the terminal device 10. For example, the input unit 12 receives an operation such as a designation operation by the user via the display unit 16 of the terminal device 10. For example, the input unit 12 functions as an acceptance unit that receives the operation of the user by the function of the touch panel. In this case, the input unit 12 and the acceptance unit 153 may be integrated. Note that, as a method of detecting the operation of the user by the input unit 12, a capacitance method is mainly adopted in the tablet terminal, but any method may be adopted as long as the operation of the user can be detected and the function of the touch panel can be achieved, such as a resistive film method, a surface acoustic wave method, an infrared method, and an electromagnetic induction method, which are other detection methods.

For example, the input unit 12 receives the utterance of the user U1 as an input. The input unit 12 receives the utterance of the user U1 detected by the sensor unit 17 as an input. The input unit 12 receives, as an input, the utterance of the user U1 detected by the sound sensor of the sensor unit 17.

The output unit 13 outputs various types of information. The output unit 13 has a function of outputting sound. For example, the output unit 13 includes a speaker that outputs sound. The output unit 13 outputs various types of information by voice according to the control by the execution unit 152. The output unit 13 outputs information by voice to the user. The output unit 13 outputs the information displayed on the display unit 16 by voice.

The storage unit 14 is achieved by, for example, a semiconductor memory element such as a RAM or a flash memory, or a storage device such as a hard disk or an optical disk. The storage unit 14 stores information of a voice recognition application (program) that achieves a voice recognition function. For example, the terminal device 10 can execute voice recognition by activating the voice recognition application. The storage unit 14 stores various types of information used for displaying information. The storage unit 14 stores various types of information used for voice recognition. The storage unit 14 stores information of a dictionary (voice recognition dictionary) used for the voice recognition dictionary.

Returning to Fig. 8, the description will be continued. The control unit 15 is implemented by, for example, a CPU, an MPU, and the like executing a program (for example, an information processing program according to the present disclosure) stored inside the terminal device 10 using a RAM and the like as a work area. Furthermore, the control unit 15 may be achieved by, for example, an integrated circuit such as an ASIC or an FPGA.

As illustrated in Fig. 8, the control unit 15 includes a reception unit 151, an execution unit 152, an acceptance unit 153, and a transmission unit 154, and achieves or executes a function and an action of information processing described below. Note that the internal configuration of the control unit 15 is not limited to the configuration illustrated in Fig. 8, and may be another configuration as long as information processing to be described later is performed.

The reception unit 151 receives various types of information. The reception unit 151 receives various types of information from an external information processing apparatus. The reception unit 151 receives various types of information from another information processing apparatus such as the information processing apparatus 100.

The reception unit 151 receives information instructing activation of voice recognition from the information processing apparatus 100. The reception unit 151 receives information instructing activation of the voice recognition application from the information processing apparatus 100.

The reception unit 151 receives execution instructions of various functions from the information processing apparatus 100. For example, the reception unit 151 receives information designating a function from the information processing apparatus 100 as a function execution instruction. The reception unit 151 receives a content. The reception unit 151 receives a content to be displayed from the information processing apparatus 100. The reception unit 151 receives the information indicating the operation amount determined by the information processing apparatus 100. The reception unit 151 displays a content including the indicator corresponding to the operation amount.

The execution unit 152 executes various types of processing. The execution unit 152 determines execution of various types of processing. The execution unit 152 executes various types of processing on the basis of information from an external information processing apparatus. The execution unit 152 executes various types of processing on the basis of the information from the information processing apparatus 100. The execution unit 152 executes various types of processing in accordance with an instruction from the information processing apparatus 100. The execution unit 152 executes various types of processing on the basis of the information stored in the storage unit 14. The execution unit 152 activates voice recognition.

The execution unit 152 controls various outputs. The execution unit 152 controls voice output by the output unit 13. The execution unit 152 controls various displays. The execution unit 152 controls display on the display unit 16. The execution unit 152 controls display on the display unit 16 in response to reception by the reception unit 151. The execution unit 152 controls display on the display unit 16 on the basis of the information received by the reception unit 151. The execution unit 152 controls the display of the display unit 16 on the basis of the information received by the acceptance unit 153. The execution unit 152 controls display on the display unit 16 according to reception by the acceptance unit 153.

The acceptance unit 153 receives various types of information. The acceptance unit 153 receives an input by the user via the input unit 12. The acceptance unit 153 receives an utterance by the user as an input. The acceptance unit 153 receives an operation by the user. The acceptance unit 153 receives the operation of the user on the information displayed by the display unit 16. The acceptance unit 153 receives character input by the user.

The transmission unit 154 transmits various types of information to an external information processing apparatus.

For example, the transmission unit 154 transmits various types of information to another information processing apparatus such as the terminal device 10. The transmission unit 154 transmits the information stored in the storage unit 14.

The transmission unit 154 transmits various types of information on the basis of information from another information processing apparatus such as the information processing apparatus 100. The transmission unit 154 transmits various types of information on the basis of the information stored in the storage unit 14.

The transmission unit 154 transmits the sensor information detected by the sensor unit 17 to the information processing apparatus 100. The transmission unit 154 transmits the respiration information of the user U1 detected by the respiration sensor 171 of the sensor unit 17 to the information processing apparatus 100.

The transmission unit 154 transmits the input information input by the user to the information processing apparatus 100. The transmission unit 154 transmits the input information into which voice of the user is input to the information processing apparatus 100. The transmission unit 154 transmits the input information input by the operation of the user to the information processing apparatus 100.

The transmission unit 154 transmits the respiration information indicating the respiration of the user to information processing apparatus 100. The transmission unit 154 transmits the respiration information including the inspiration amount of the user to information processing apparatus 100. The transmission unit 154 transmits the respiration information including the change amount of the respiration of the user to information processing apparatus 100. The transmission unit 154 transmits, to the information processing apparatus 100, utterance information indicating the utterance by the user after the respiration of the user. The transmission unit 154 transmits, to the information processing apparatus 100, utterance information indicating the utterance by the user before the respiration of the user.

The display unit 16 is provided in the terminal device 10 and displays various types of information. The display unit 16 is achieved by, for example, a liquid crystal display, an organic electro-luminescence (EL) display, and the like. The display unit 16 may be achieved by any means as long as the information provided from the information processing apparatus 100 can be displayed. The display unit 16 displays various types of information under the control of the execution unit 152.

The display unit 16 displays various types of information on the basis of the information from the information processing apparatus 100. The display unit 16 displays information received from the information processing apparatus 100. The display unit 16 displays information indicating the operation amount received from the information processing apparatus 100. The display unit 16 displays information indicating the operation amount determined by the information processing apparatus 100. The display unit 16 displays the indicator corresponding to the operation amount. The display unit 16 displays the content received from the information processing apparatus 100. The display unit 16 displays the content including the indicator corresponding to the operation amount.

The display unit 16 displays the content. The display unit 16 displays the content received by the reception unit 151.

The sensor unit 17 detects predetermined information. The sensor unit 17 detects the respiration information about the user. The sensor unit 17 includes the respiration sensor 171 as means for detecting respiration information indicating the respiration of the user. The sensor unit 17 detects the respiration information by using the respiration sensor 171.

The sensor unit 17 detects the respiration information by using the respiration sensor 171. The sensor unit 17 detects the respiration information by the respiration sensor 171 using a millimeter wave radar. Furthermore, the sensor unit 17 is not limited to the millimeter wave radar, and may include the respiration sensor 171 having any configuration as long as the respiration information of the user can be detected. The respiration sensor 171 may be an image sensor. The respiration sensor 171 may be a wearable sensor. As the respiration sensor 171, either a contact type sensor or a non-contact type sensor may be used.

Furthermore, the sensor unit 17 is not limited to the above, and may include various sensors. The sensor unit 17 may include a sensor (position sensor) that detects position information, such as a global positioning system (GPS) sensor. Note that the sensor unit 17 is not limited to the above, and may include various sensors. Furthermore, the terminal device 10 may include a light source (light source unit) such as a light emitting diode (LED) for notifying the user by light. For example, the light source unit blinks according to the control by the execution unit 152.

[1-5. Procedure of information processing according to embodiment]

Next, a procedure of various types of information processing according to one embodiment will be described with reference to Figs. 9 to 11.

[1-5-1. Procedure of processing according to information processing apparatus]

First, a flow of processing according to the information processing apparatus according to one embodiment of the present disclosure will be described with reference to Fig. 9. Fig. 9 is a flowchart illustrating a processing procedure of the information processing apparatus according to one embodiment of the present disclosure. Specifically, Fig. 9 is a flowchart illustrating a procedure of the information processing by the information processing apparatus 100.

As illustrated in Fig. 9, information processing apparatus 100 acquires the respiration information indicating the respiration of the user (Step S101). Then, the information processing apparatus 100 determines the operation amount regarding the operation by the user on the basis of the respiration of the user indicated by the respiration information (Step S102).

[1-5-2. Procedure of processing according to information processing system]

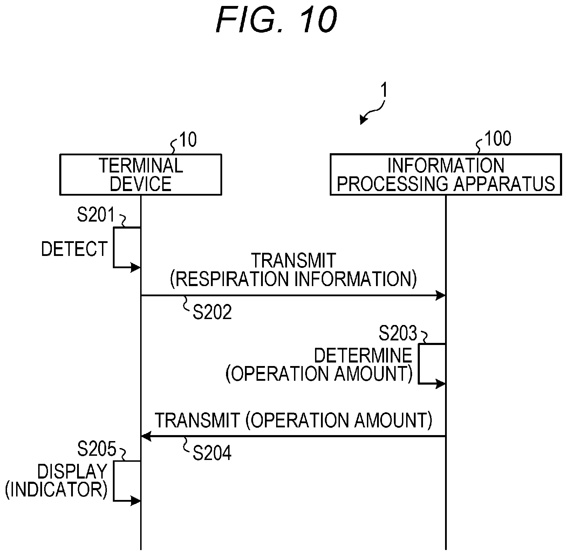

Next, a flow of processing according to the information processing system according to one embodiment of the present disclosure will be described with reference to Fig. 10. Fig. 10 is a sequence diagram illustrating a processing procedure of the information processing system according to one embodiment of the present disclosure.

As illustrated in Fig. 10, the terminal device 10 detects the respiration information indicating the respiration of the user (Step S201). For example, the terminal device 10 acquires the respiration information of the user detected by the respiration sensor 171. Then, terminal device 10 transmits respiration information indicating the respiration of the user to information processing apparatus 100 (Step S202).

The information processing apparatus 100 determines the operation amount regarding the operation by the user on the basis of the respiration of the user indicated by the respiration information acquired from the terminal device 10 (Step S203). In the example of Fig. 10, the information processing apparatus 100 determines the operation amount to be a value "10" on the basis of the respiration information acquired from the terminal device 10.

Then, the information processing apparatus 100 transmits the determined operation amount to the terminal device 10 (Step S204). For example, the information processing apparatus 100 transmits the value "10" of the determined operation amount to the terminal device 10. Then, the terminal device 10 displays the indicator corresponding to the value "10" of the operation amount received from the information processing apparatus 100 (Step S205). For example, the terminal device 10 displays the indicator of a size corresponding to the value "10" of the operation amount on the display (the display unit 16 and the like).

[1-5-3. Specific example of processing according to information processing system]

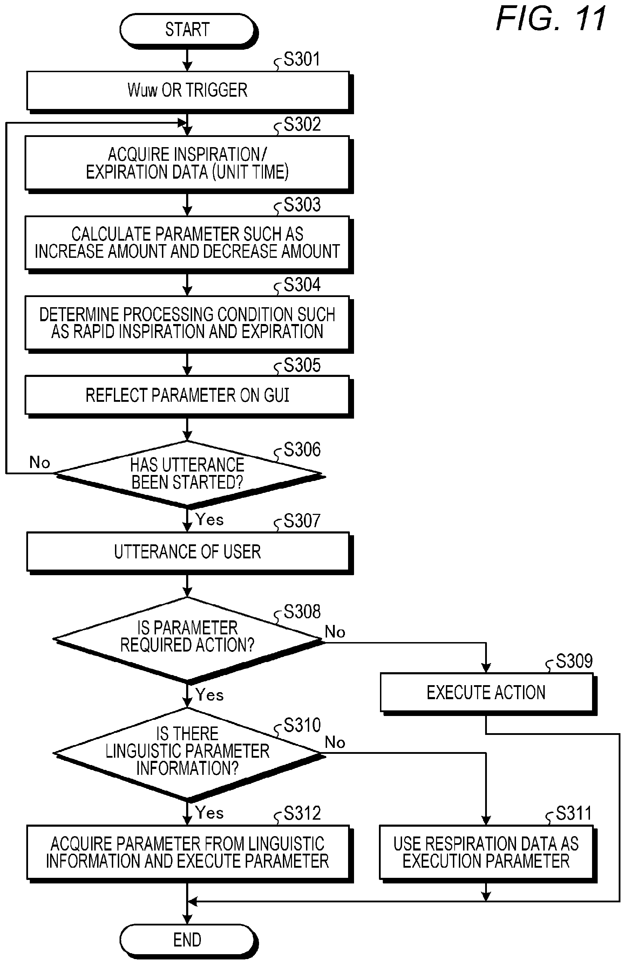

Next, an example of specific processing related to the information processing system will be described with reference to Fig. 11. Fig. 11 is a flowchart illustrating processing of the information processing system according to one embodiment of the present disclosure. Note that, in the following, a case where the information processing system 1 performs processing will be described as an example, but the processing illustrated in Fig. 11 may be performed by either the information processing apparatus 100 or the terminal device 10 included in the information processing system 1.

As illustrated in Fig. 11, the information processing system 1 acquires Wake up Word (Wuw) or a trigger (Step S301). For example, the information processing system 1 acquires an utterance for activating voice recognition by the user or a predetermined input serving as a trigger.

Then, the information processing system 1 acquires inspiration/expiration data (Step S302). For example, the information processing system 1 acquires data (respiration information) indicating the inspiration and the expiration of the user per unit time.

Then, the information processing system 1 calculates parameters such as the increase amount and the decrease amount (Step S303). For example, the information processing system 1 calculates a change amount of the respiration which is the increase amount, the decrease amount, and the like of inspiration per unit time.

Then, the information processing system 1 determines processing conditions such as rapid inspiration and expiration (Step S304). For example, in a case where there is rapid inspiration or expiration, the information processing system 1 determines the operation amount by a corresponding calculation method. For example, the information processing system 1 determines the operation amount by a calculation method corresponding to the respiration state of the user among the calculation methods illustrated in the graphs GR1 to GR5 and the like.

Then, the information processing system 1 reflects the parameter on a graphical user interface (GUI) (Step S305). For example, the information processing system 1 displays an indicator corresponding to the determined operation amount (parameter).

Then, in a case where the utterance has not been started (Step S306: No), the information processing system 1 returns to Step S302 and repeats the processing.

Furthermore, in a case where the utterance has been started (Step S306: Yes), the information processing system 1 acquires the utterance of the user (Step S307). For example, the information processing system 1 detects the utterance of the user by the terminal device 10 used by the user. Note that, in the case of input area selection, the information processing system 1 performs input to the selected area and ends the processing. For example, in the case of input area selection, the information processing system 1 inputs information corresponding to an utterance to the selected area, and ends the processing.

Then, the information processing system 1 determines whether or not the parameter is a required action (Step S308). For example, the information processing system 1 determines whether or not the processing (action) corresponding to the utterance of the user is an action that requires the operation amount (parameter).

In a case where the parameter is not a necessary action (Step S308: No), the information processing system 1 executes the action (Step S309). For example, in a case where the processing (action) corresponding to the utterance of the user is not an action that requires an operation amount (parameter), the information processing system 1 executes the processing (action) corresponding to the utterance of the user.

In a case where the parameter is a necessary action (Step S308: Yes), the information processing system 1 determines whether or not there is linguistic parameter information (Step S310). For example, the information processing system 1 determines whether or not information indicating an operation amount (parameter) is included in the utterance of the user.

In a case where there is no linguistic parameter information (Step S310: No), the information processing system 1 uses respiration data as an execution parameter (Step S311). For example, in a case where the information indicating the operation amount (parameter) is not included in the utterance of the user, the information processing system 1 executes processing (action) by using the operation amount (parameter) determined on the basis of the respiration of the user.

Meanwhile, in a case where there is linguistic parameter information (Step S310: Yes), the information processing system 1 acquires a parameter from the linguistic information and executes the parameter (Step S312). For example, in a case where information indicating an operation amount (parameter) is included in the utterance of the user, the information processing system 1 executes processing (action) by using the operation amount (parameter) on the basis of the utterance of the user.

[1-6. Exemplary of reflection of respiration on operation amount]

The reflection of the respiration on the operation amount is not limited to the above-described aspect, and various aspects may be performed. This point will be described below. Note that, in the following description, descriptions of points similar to those in Fig. 2 will be omitted as appropriate.

[1-6-1. Example of reflection at the time of sudden inspiration]

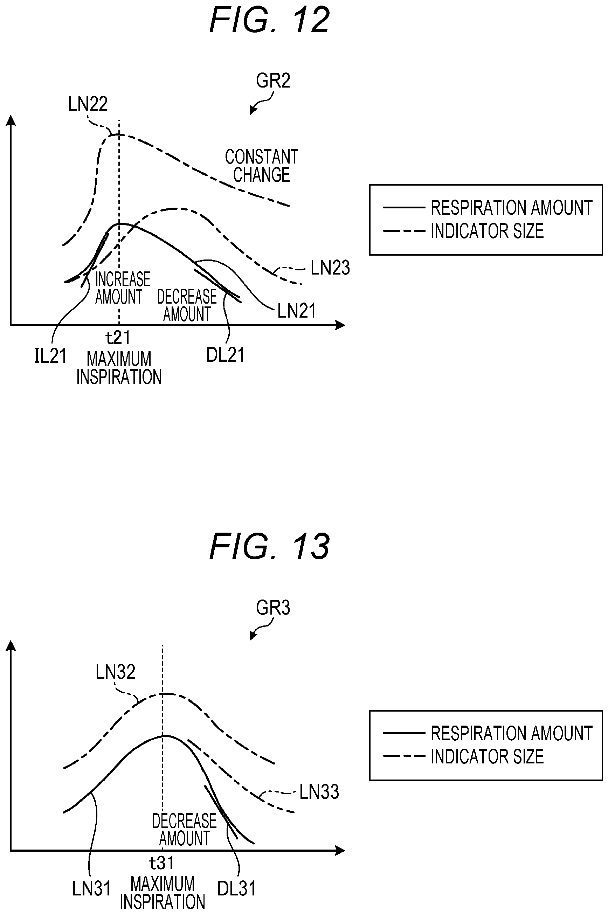

An example of reflection at the time of sudden inspiration will be described with reference to Fig. 12. Fig. 12 is a diagram illustrating an example of reflection of the respiration of the user on the operation amount.

A graph GR2 in Fig. 12 is a graph illustrating a relationship between the respiration of the user and the operation amount. Specifically, the graph GR2 in Fig. 12 is a graph illustrating a relationship between the inspiration amount of the user and the size of the indicator (indicator size) on the basis of the operation amount. In the graph GR2 in Fig. 12, a vertical axis represents the inspiration amount and the size of the indicator, and a horizontal axis represents a time. Furthermore, in the graph GR2 in Fig. 12, a line (line LN21) indicating the respiration amount is indicated by a solid line, and a line (line LN22) indicating the indicator size is indicated by a one-dot chain line. Note that, in the graph GR2 in Fig. 12, a line LN1 in Fig. 2 is indicated by a two-dot chain line LN23 as an example of a comparison target of the change in the respiration amount.

The indicator parameter "P_indicator" increases until maximum inspiration is reached. In the example of Fig. 12, the indicator parameter "P_indicator" increases in consideration of the inspiration increase amount until a time t21 when the maximum inspiration amount "B_max" is reached. An inspiration increase amount IL21 in Fig. 12 indicates an inspiration increase amount at a certain time point until the maximum inspiration is reached.

For example, in a case where the inspiration increase amount "B_increase" becomes larger than the increase amount threshold "B_increase_thres" until the maximum inspiration, the information processing apparatus 100 calculates the indicator parameter "P_indicator" indicating the operation amount using the current inspiration amount "B_current", the inspiration increase amount "B_increase", and the following Formula (3). For example, in a case where the inspiration increase amount "B_increase" becomes larger than the increase amount threshold "B_increase_thres" while the user is performing inspiration, the information processing apparatus 100 calculates the indicator parameter "P_indicator" indicating the operation amount using Formula (3).

[Mathematical formula 3]

$$\text{if B\_increase\_thres} < \text{B\_increase:}$$

$$\text{P\_indicator} = a * \text{B\_current} + b * \text{B\_increase} + c \qquad \cdots (3)$$

"a", "b", and "c" in the above Formula (3) represent predetermined constants. The values of "a", "b", and "c" in Formula (3) may be different from the values of "a", "b", and "c" in Formula (1) and Formula (2). In this manner, the information processing apparatus 100 increases the operation amount in proportion to the inspiration amount and the inspiration increase amount at the time of sudden inspiration. The information processing system 1 increases the operation amount in proportion to the inspiration amount and the inspiration increase amount at the time of sudden inspiration. Therefore, the information processing system 1 expands the indicator in proportion to the inspiration amount and the inspiration increase amount at the time of sudden inspiration. As described above, the information processing system 1 increases the operation amount in consideration of the inspiration increase amount at the time of sudden inspiration, and enlarges the indicator, and thus, it is possible to reduce the burden of the increase in the operation amount and the indicator enlargement.

Note that the above Formula (3) is an example of the calculation of the indicator parameter "P_indicator" in a case where the inspiration increase amount "B_increase" becomes larger than the increase amount threshold "B_increase_thres" until the maximum inspiration, and various expressions may be used for the calculation of the indicator parameter "P_indicator". For example, in a case where the inspiration increase amount "B_increase" is equal to or less than the increase amount threshold "B_increase _thres", another calculation formula (Formula (1)) is used.

Note that which one of the cases equal to the threshold is included may be appropriately set. The information processing apparatus 100 may use the above Formula (3) in a case where the inspiration increase amount "B_increase" is equal to or larger than the increase amount threshold "B_increase_thres", and use the following Formula (1) in a case where the inspiration increase amount "B_increase" is less than the increase amount threshold "B_increase_thres".

Furthermore, the indicator parameter "P_indicator" changes constantly after the maximum inspiration. In the example of Fig. 12, the indicator parameter "P_indicator" decreases constantly with the lapse of time after a time t21 when the maximum inspiration amount "B_max" is reached. An inspiration decrease amount DL21 in Fig. 12 indicates an inspiration decrease amount (expiration increase amount) at a certain time point after reaching the maximum inspiration.

For example, the information processing apparatus 100 calculates the indicator parameter "P_indicator" indicating the operation amount by using the maximum inspiration amount "B_max", the time variable "Time", and the following Formula (4) after the maximum inspiration. For example, while the user performs expiration after the inspiration increase amount "B_increase" becomes larger than the increase amount threshold "B_increase_thres", the information processing apparatus 100 calculates the indicator parameter "P_indicator" indicating the operation amount using Formula (4).

[Mathematical formula 4]

$$\text{if B\_decrease\_thres} < \text{B\_decrease:}$$
$$\text{P\_indicator} = \text{B\_max} - c * \text{Time} \qquad \cdots (4)$$

"c" in the above Formula (4) represents a predetermined constant. The value of "c" in Formula (4) may be different from the value of "c" in Formula (2) or Formula (3). Note that the value of "c" in Formula (4) may be the same as the value of "c" in Formula (2). In this manner, the information processing apparatus 100 decreases the operation amount to be constant at the time of the expiration and increases the operation amount in proportion to the inspiration amount at the time of the inspiration. The information processing system 1 decreases the indicator size to be constant at the time of the expiration.

Note that Formula (4) described above is an example of calculation of the indicator parameter "P_indicator" in a case where the expiration increase amount "B_decrease" is larger than the expiration amount threshold "B_decrease_thres" after the maximum inspiration, and various expressions may be used for calculation of the indicator parameter "P_indicator". For example, in a case where the expiration increase amount "B_decrease" is equal to or less than the expiration amount threshold "B_decrease_thres", another calculation formula (the following Formula (6)) is used, and this point will be described later in detail.

Note that which one of the cases equal to the threshold is included may be appropriately set. The information processing apparatus 100 may use the above Formula (4) in a case where the expiration increase amount "B_decrease" is equal to or larger than the expiration amount threshold "B_decrease_thres", and use the following Formula (6) in a case where the expiration increase amount "B_decrease" is less than the expiration amount threshold "B_decrease_thres".

The information processing apparatus 100 calculates the operation amount (indicator parameter) by the above-described processing, thereby determining the operation amount regarding the operation by the user by reflecting the sudden inspiration of the user. In this manner, the information processing apparatus 100 can appropriately calculate the operation amount even at the time of sudden inspiration by determining the operation amount using the information on the respiration of the user.

[1-6-2. Example of reflection on operation amount of expiration]

An example of reflection on the operation amount of the expiration will be described with reference to Fig. 13. Fig. 13 is a diagram illustrating an example of reflection of the respiration of the user on the operation amount. Note that description of points similar to those in Fig. 12 will be omitted as appropriate.

A graph GR3 in Fig. 13 is a graph illustrating a relationship between the respiration of the user and the operation amount. Specifically, the graph GR3 in Fig. 13 is a graph illustrating a relationship between the inspiration amount of the user and the size of the indicator (indicator size) on the basis of the operation amount. In the graph GR3 in Fig. 13, a vertical axis represents the inspiration amount and the size of the indicator, and a horizontal axis represents a time. Furthermore, in the graph GR3 in Fig. 13, a line (line LN31) indicating the respiration amount is indicated by a solid line, and a line (line LN32) indicating the indicator size is indicated by a one-dot chain line. Note that, in a graph GR3 in Fig. 13, a line LN1 in Fig. 2 is indicated by a two-dot chain line LN33 as an example of a comparison target of the change in the respiration amount.

The indicator parameter "P_indicator" increases until maximum inspiration is reached. In the example of Fig. 13, the indicator parameter "P_indicator" increases according to the inspiration amount until a time t31 when the maximum inspiration amount "B_max" is reached.

For example, the information processing apparatus 100 calculates the indicator parameter "P_indicator" indicating the operation amount by using the following Formula (5) in a case where the sudden inspiration is performed until the maximum inspiration. For example, in a case where the inspiration increase amount "B_increase" becomes larger than the increase amount threshold "B_increase_thres" while the user is performing the inspiration, the information processing apparatus 100 calculates the indicator parameter "P_indicator" indicating the operation amount using Formula (5).

[Mathematical formula 5]

$$\text{if } B\_increase\_thres\_ < B\_increase:$$

$$\cdots(5)$$

$$P\_indicator = a * B\_current + b * B\_increase + c$$

Since Formula (5) is similar to Formula (3), the description thereof is omitted. Furthermore, in a case where normal inspiration is performed until the maximum inspiration, the information processing apparatus 100 calculates the indicator parameter "P_indicator" indicating the operation amount using Formula (1). Note that Fig. 13 is mainly for describing determination of the operation amount and change of the indicator size at the time of the expiration, and the processing at the time of the inspiration is not limited to the above.

Furthermore, the indicator parameter "P_indicator" decreases after the maximum inspiration. In the example of Fig. 13, the indicator parameter "P_indicator" decreases in proportion to the expiration amount after a time t31 when the maximum inspiration amount "B_max" is reached. An inspiration decrease amount DL31 in Fig. 13 indicates an inspiration decrease amount (expiration increase amount) at a certain time point after reaching the maximum inspiration.

For example, after the maximum inspiration, in a case where the expiration increase amount "B_decrease" is less than the expiration amount threshold "B_decrease_thres", the information processing apparatus 100 calculates the indicator parameter "P_indicator" indicating the operation amount using the maximum inspiration amount "B_max", the expiration increase amount "B_decrease", and the following Formula (6). For example, in a case where the expiration increase amount "B_decrease" is less than the expiration amount threshold "B_decrease_thres" while the user performs the expiration, the information processing apparatus 100 calculates the indicator parameter "P_indicator" indicating the operation amount using Formula (6).

[Mathematical formula 6]

$$\text{if } B\_decrease < B\_decrease\_thres:$$

$$\cdots(6)$$

$$P\_indicator = B\_max - (b * B\_decrease + c)$$

"b" and "c" in the above Formula (6) represent predetermined constants. The values of "b" and "c" in Formula (6) may be different from the values of "b" and "c" in Formulas (1) to (5). In this manner, the information processing apparatus 100 decreases the operation amount in proportion to the expiration amount at the time of the expiration larger than usual. The information processing system 1 decreases the operation amount in proportion to the expiration amount at the time of the expiration larger than usual. Therefore, the information processing system 1 can accelerate the decrease in the operation amount with a larger expiration increase amount (inspiration decrease amount) than usual. The information processing system 1 can accelerate the reduction of the indicator by a larger expiration increase amount (decrease amount) than usual. As described above, the information processing system 1 reduces the operation amount in consideration of the expiration increase amount (inspiration decrease amount) at the time of the expiration larger than usual, and reduces the indicator, so that it is possible to reduce the burden of the reduction in the operation amount and the indicator reduction. Therefore, the information processing system 1 can correct overshoot in a short time.

Note that Formula (6) described above is an example of calculation of the indicator parameter "P_indicator" in a case where the expiration increase amount "B_decrease" is less than the expiration amount threshold "B_decrease_thres" after the maximum inspiration, and various expressions may be used for calculation of the indicator parameter "P_indicator". For example, in a case where the expiration increase amount "B_decrease" is equal to or larger than the expiration amount threshold "B_decrease_thres", another calculation formula (Formula (2) or Formula (4)) is used.

Note that which one of the cases equal to the threshold is included may be appropriately set. The information processing apparatus 100 may use Formula (6) described above in a case where the expiration increase amount "B_decrease" is equal to or less than the expiration amount threshold "B_decrease_thres", and may use Formula (2) or Formula (4) in a case where the expiration increase amount "B_decrease" is larger than the expiration amount threshold "B_decrease_thres".

The information processing apparatus 100 calculates the operation amount (indicator parameter) by the above-described processing, thereby determining the operation amount regarding the operation by the user by reflecting expiration larger than usual by the user. In this manner, the information processing apparatus 100 can appropriately calculate the operation amount even at the time of the expiration larger than usual by determining the operation amount using the respiration information of the user.

[1-6-3. Example in which expiration at the time of inspiration is not reflected]

For example, in a case where the operation amount or the indicator is to be greatly increased or decreased, there is a case where one inspiration or expiration is not sufficient, and in a case where the inspiration or expiration is performed again, the inspiration or expiration is always performed before the inspiration or expiration. Therefore, the information processing system 1 may ignore the inspiration and the expiration so as not to affect the operation amount and the indicator. For example, the information processing system 1 may ignore expiration after the rapid inspiration. For example, the information processing system 1 may ignore the inspiration after the rapid expiration. These points will be described below.

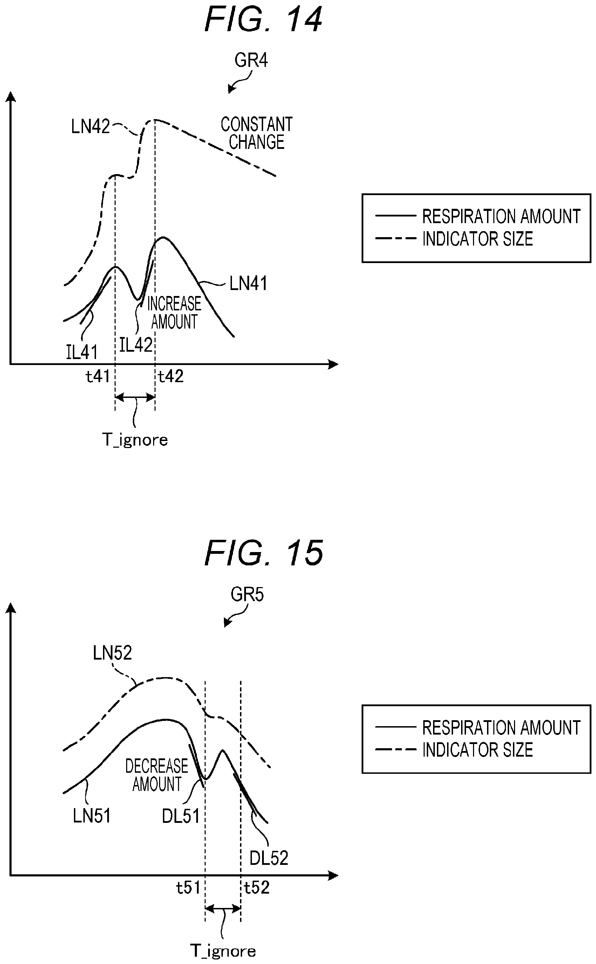

First, an example in which expiration at the time of the inspiration is not reflected will be described with reference to Fig. 14. Fig. 14 is a diagram illustrating an example of reflection of the respiration of the user on the operation amount. Note that description of points similar to those in Figs. 12 and 13 will be omitted as appropriate.

A graph GR4 in Fig. 14 is a graph illustrating a relationship between the respiration of the user and the operation amount. Specifically, the graph GR4 in Fig. 14 is a graph illustrating a relationship between the inspiration amount of the user and the size of the indicator (indicator size) on the basis of the operation amount. In the graph GR4 in Fig. 14, a vertical axis represents the inspiration amount and the size of the indicator, and a horizontal axis represents a time. Furthermore, in the graph GR4 in Fig. 14, a line (line LN41) indicating the respiration amount is indicated by a solid line, and a line (line LN42) indicating the indicator size is indicated by a one-dot chain line.

In the example of Fig. 14, a case is illustrated as an example in which the user performs a sudden inspiration until a time t41, and subsequently resumes the inspiration from a time t42 which is not long after the time t41. An inspiration increase amount IL41 in Fig. 14 indicates an inspiration increase amount at a certain time point until the time t41. An inspiration increase amount IL42 in Fig. 14 indicates an inspiration increase amount at a certain time point after the time t41 and before the time t42.

For example, after an inspiration increase amount equal to or larger than the increase amount threshold "B_increase_thres" is observed, the information processing apparatus 100 does not use the expiration for a certain period of time "T_ignore" (also referred to as "expiration ignoring period") from the time point (inspiration/expiration conversion point) when the inspiration is switched to the expiration for the determination of the operation amount. For example, after an inspiration increase amount equal to or larger than the increase amount threshold "B_increase_thres" is observed, the information processing apparatus 100 does not use the expiration for the indicator size adjustment for a certain period of time "T_ignore" (expiration ignoring period) from the inspiration/expiration conversion point.

In the example of Fig. 14, the information processing apparatus 100 does not decrease the operation amount according to the expiration of the user in the expiration ignoring period from the time t41 that is the inspiration/expiration conversion point after the inspiration increase amount equal to or larger than the increase amount threshold "B_increase_thres" is observed. For example, the information processing apparatus 100 does not decrease the operation amount according to the expiration of the user from the time t41 to the time t42 when the expiration ignoring period elapses. Note that the information processing apparatus 100 is not limited to a case where the expiration of the user is not used at all in the expiration ignoring period, and may reduce the influence of the expiration of the user in the expiration ignoring period. For example, the information processing apparatus 100 may reduce the decrease in the operation amount due to the expiration of the user in the expiration ignoring period as compared with the normal time.

Furthermore, after the inspiration increase amount equal to or larger than the increase amount threshold "B_increase_thres" is observed, the information processing apparatus 100 uses the inspiration for a certain period of time "T_ignore" (expiration ignoring period) from the inspiration/expiration conversion point to determine the operation amount. In the example of Fig. 14, the information processing apparatus 100 increases the operation amount according to the inspiration within the expiration ignoring period from the time t41, which is the inspiration/expiration conversion point after the inspiration increase amount equal to or larger than the increase amount threshold "B_increase_thres" is observed. As indicated by a graph GR4 in Fig. 14, the information processing apparatus 100 enlarges the indicator size according to the inspiration of the user during a period (expiration ignoring period) from the time t41 to the time t42.

For example, in a case where the indicator is greatly increased or decreased, one inspiration may not be sufficient, and in a case where inspiration is performed again, expiration is always performed before the inspiration, but the information processing apparatus 100 ignores the expiration so as not to affect the indicator. In this manner, the information processing apparatus 100 can appropriately calculate the operation amount (indicator parameter) or adjust the indicator size by ignoring the expiration after the sudden inspiration by the above-described processing.

[1-6-4. Example in which inspiration at the time of expiration is not reflected]

Next, an example in which inspiration at the time of the expiration is not reflected will be described with reference to Fig. 15. Fig. 15 is a diagram illustrating an example of reflection of the respiration of the user on the operation amount. Note that description of points similar to those in Figs. 12 to 14 will be omitted as appropriate.

A graph GR5 in Fig. 15 is a graph illustrating a relationship between the respiration of the user and the operation amount. Specifically, the graph GR5 in Fig. 15 is a graph illustrating a relationship between the inspiration amount of the user and the size of the indicator (indicator size) on the basis of the operation amount. In the graph GR5 in Fig. 15, a vertical axis represents the inspiration amount and the size of the indicator, and a horizontal axis represents a time. Furthermore, in the graph GR5 in Fig. 15, a line (line LN51) indicating the respiration amount is indicated by a solid line, and a line (line LN52) indicating the indicator size is indicated by a one-dot chain line.

In the example of Fig. 15, a case is illustrated as an example in which the user suddenly performs the expiration until a time t51, and subsequently resumes the expiration from a time t52 which is not long after the time t51. An inspiration decrease amount IL 51 in Fig. 15 indicates an inspiration decrease amount (expiration increase amount) at a certain time point until the time t51. An inspiration decrease amount IL 52 in Fig. 15 indicates an inspiration decrease amount (expiration increase amount) at a certain time point after the time t51 and before the time t52.

For example, after an inspiration decrease amount equal to or less than the expiration amount threshold "B_decrease_thres" is observed, the information processing apparatus 100 does not use the inspiration for a certain period of time "T_ignore" (also referred to as an "inspiration ignoring period") from a time point at which the expiration is switched to the inspiration (expiration/inspiration conversion point) for determination of the operation amount. Note that the value of the certain time "T_ignore" in Fig. 15 and the value of the certain time "T_ignore" in Fig. 14 may be different values. For example, after the inspiration decrease amount equal to or less than the expiration amount threshold "B_decrease_thres" is observed, the information processing apparatus 100 does not use the inspiration for the indicator size adjustment for a certain period of time "T_ignore" (inspiration ignoring period) from the expiration/inspiration conversion point.

In the example of Fig. 15, the information processing apparatus 100 does not increase the operation amount according to the inspiration of the user in the inspiration ignoring period from the time t51 that is the expiration/inspiration conversion point after the inspiration decrease amount equal to or less than the expiration amount threshold "B_decrease_thres" is observed. For example, the information processing apparatus 100 does not increase the operation amount according to the inspiration of the user during a period from the time t51 to the time t52 when the inspiration ignoring period elapses. Note that the information processing apparatus 100 is not limited to the case of not using the inspiration of the user at all in the inspiration ignoring period, and may reduce the influence of the inspiration of the user in the inspiration ignoring period. For example, the information processing apparatus 100 may reduce the increase in the operation amount due to the inspiration of the user in the inspiration ignoring period as compared with the normal time.

Furthermore, after an inspiration decrease amount equal to or less than the expiration amount threshold "B_decrease_thres" is observed, the information processing apparatus 100 uses the expiration for a certain period of time "T_ignore" (inspiration ignoring period) from the expiration/inspiration conversion point to determine the operation amount. In the example of Fig. 15, the information processing apparatus 100 decreases the operation amount according to the expiration within the inspiration ignoring period from the time t51, which is the expiration/inspiration conversion point after the inspiration decrease amount equal to or less than the expiration amount threshold "B_decrease_thres" is observed. As indicated by a graph GR5 in Fig. 15, the information processing apparatus 100 reduces the indicator size to the expiration of the user in the period (inspiration ignoring period) from the time t51 to the time t52. For example, in a case where the indicator is to be greatly increased or decreased, one expiration may not be sufficient, and in a case where expiration is performed again, inspiration is always performed before the expiration, but the information processing apparatus 100 ignores the inspiration so as not to affect the indicator. In this manner, the information processing apparatus 100 can appropriately calculate the operation amount (indicator parameter) or adjust the indicator size by ignoring the inspiration after the rapid expiration by the above-described processing.

[1-7. Prediction processing]

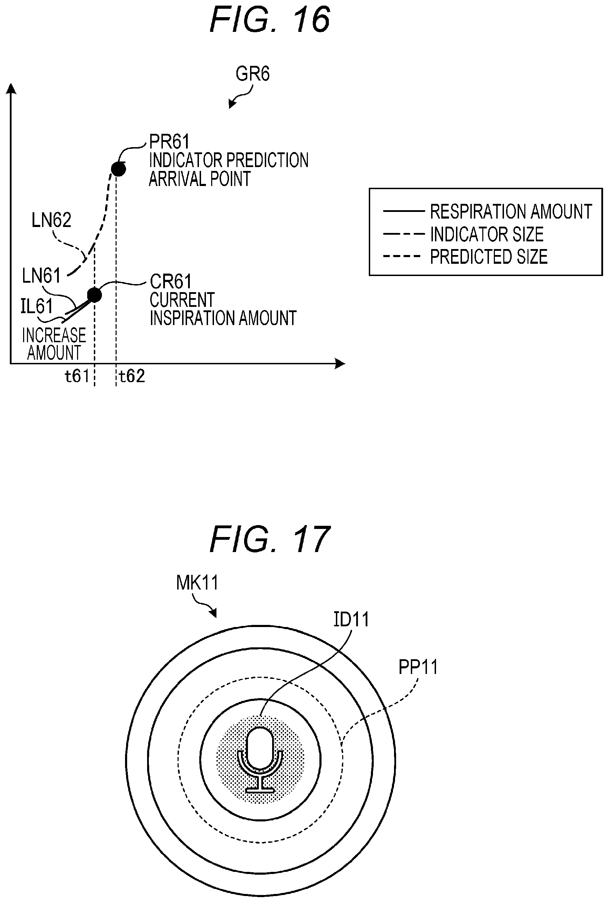

The information processing system 1 may perform prediction processing of predicting the respiration or the operation amount on the basis of the respiration of the user. This point will be described with reference to Figs. 16 and 17.

[1-7-1. Prediction example of operation amount]

First, an example of prediction of the operation amount will be described with reference to Fig. 16. Fig. 16 is a diagram illustrating an example of the prediction of the operation amount. In the following example, the information processing apparatus 100 predicts the operation amount (predicted operation amount) and the indicator size (predicted size) using the inspiration amount at the prediction time point (current inspiration amount) and the increase amount.

A graph GR6 in Fig. 16 is a graph illustrating a relationship between the respiration of the user, the operation amount, and the predicted operation amount. Specifically, the graph GR6 in Fig. 16 is a graph illustrating a relationship between the inspiration amount of the user and the size of the indicator and the predicted size on the basis of the operation amount. In the graph GR6 in Fig. 16, a vertical axis represents the inspiration amount, the size of the indicator, and the predicted size, and a horizontal axis represents a time. Furthermore, in the graph GR6 in Fig. 16, a line (line LN 61) indicating the respiration amount is indicated by a solid line. Furthermore, in the graph GR6 in Fig. 16, a line (line LN62) indicating the size of the indicator, the size of the indicator is indicated by a one-dot chain line, and the predicted size is indicated by a dotted line. Specifically, up to the time t61 indicates the size of the indicator on the basis of the operation amount determined on the basis of the respiration information up to that time point, and from time the t61 to a time t62 indicates the predicted size on the basis of the predicted operation amount predicted on the basis of the respiration information up to the time t61.

As described above, in the example of Fig. 16, the information processing apparatus 100 predicts the predicted operation amount and the predicted size thereafter on the basis of the inspiration performed by the user by the time t61. An inspiration increase amount IL61 in Fig. 16 indicates an inspiration increase amount at a certain time point until the time t61. For example, the inspiration increase amount IL61 indicates the inspiration increase amount at the time t61. A point CR 61 in Fig. 16 indicates an inspiration amount (current inspiration amount) at the current time point (time t61).

The information processing apparatus 100 calculates an indicator prediction arrival point "Point_pr" indicating the predicted operation amount using the current inspiration amount "B_current", the increase amount "B_increase", and the following Formula (7). Therefore, the indicator prediction arrival point "Point_pr" becomes a value considering the current inspiration amount "B_current" and the increase amount "B_increase".
[Mathematical formula 7]

$$Point\_pr = a * B\_current + b * B\_increase \qquad \cdots (7)$$

"a" and "b" in the above Formula (7) represent predetermined constants. The values of "a" and "b" in Formula (7) may be different from the values of "a" and "b" in Formulas (1) to (6) . Note that the above Formula (7) is an example of calculation of the indicator prediction arrival point "Point_pr", and various expressions may be used for calculation of the indicator prediction arrival point "Point_pr". For example, in the case of sudden inspiration, the information processing apparatus 100 may predict the indicator prediction arrival point "Point_pr" in consideration of sudden reflection as in Formula (3). Furthermore, the information processing apparatus 100 may predict the indicator prediction arrival point "Point_pr" on the basis of the past respiration history of the user. The information processing apparatus 100 may predict the indicator prediction arrival point "Point_pr" using a model that outputs the indicator prediction arrival point "Point_pr" in a case where the current inspiration amount "B_current" and the increase amount "B_increase" are input. The information processing apparatus 100 may predict the indicator prediction arrival point "Point_pr" using a model learned using a combination of the inspiration amount and the inspiration increase amount at a certain time point of the user in the past and the maximum inspiration amount thereafter.

Furthermore, the information processing apparatus 100 may predict a time (prediction required time) required to reach the indicator prediction arrival point "Point_pr" using the current inspiration amount "B_current" and the increase amount "B_increase". The information processing apparatus 100 may predict the time (prediction required time) required for reaching the indicator prediction arrival point "Point_pr" on the basis of the past respiration history of the user. The information processing apparatus 100 may predict a time required for reaching the maximum inspiration amount from the current time point by using a model that outputs a prediction required time required for reaching the maximum inspiration amount in a case where the current inspiration amount "B_current" and the increase amount "B_increase" are input. The information processing apparatus 100 may predict the prediction required time from the current time point until the inspiration amount reaches the maximum inspiration amount by using a model learned by using a certain time point of the user in the past, and a combination of the inspiration amount and the inspiration increase amount at that time point and the time when the maximum inspiration amount is reached thereafter. Then, the information processing apparatus 100 determines a time obtained by adding the prediction required time to the current time as a time point (time) at which the current time reaches the indicator prediction arrival point "Point_pr". In the example of Fig. 16, the information processing apparatus 100 predicts the time t62 to reach the indicator prediction arrival point "Point_pr". Note that the above is an example, and the information processing apparatus 100 may predict the time to reach the indicator prediction arrival point "Point_pr" by appropriately using various types of information. For example, the information processing apparatus 100 may predict the time required to reach the indicator prediction arrival point "Point_pr" using the current inspiration amount "B_current", the increase amount "B_increase", and the time information indicating the current time point.

With the above-described processing, in the example of Fig. 16, the information processing apparatus 100 predicts that the operation amount (indicator parameter) increases to the value of the indicator prediction arrival point "Point_pr" at the time t62. A point PR 61 in Fig. 16 indicates the predicted operation amount and the predicted size predicted to reach the time t62.

Therefore, the information processing system 1 can predict the arrival point of the maximum inspiration from the current inspiration amount and the inspiration increase amount.

[1-7-2. Display example of predicted operation amount]

Furthermore, the information processing system 1 may display predicted information. This point will be described with reference to Fig. 17. Fig. 17 is a diagram illustrating an example of display of a predicted operation amount. For example, Fig. 17 illustrates an example of the UI display by the prediction of the inspiration amount.

A mark MK 11 in Fig. 17 is a figure in which three circles having different sizes are arranged around the indicator ID 11. The size of the indicator ID 11 is changed according to the respiration of the user. Furthermore, a circular prediction line PP 11 indicated by a dotted line superimposed on the mark MK 11 indicates a predicted size. The mark MK 11, the indicator ID 11, and the prediction line PP 11 are displayed on the terminal device 10.

For example, indicator ID 11 is an indicator that is responsive to an actual respiration amount. For example, the prediction line PP 11 is a region indicating arrival point information predicted on the basis of the current inspiration amount. Therefore, the information processing system 1 allows the user to know the point that can be reached by the current inspiration, and can use the point as a guide as to whether or not to perform inspiration again as necessary.

As described above, the information processing system 1 can indicate whether or not the user needs additional inspiration by displaying the predicted arrival point of the maximum inspiration as a GUI in advance. Therefore, the information processing system 1 can improve usability.

[1-8. Other application examples]

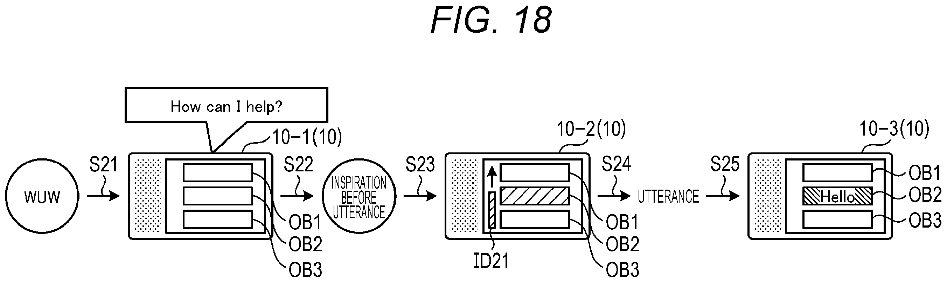

Note that the information processing system 1 is not limited to the above, and may be used for various target operations. This point will be described with reference to Figs. 18 to 20.

[1-8-1. Operation of selector indicator]

First, an example of use of the operation amount will be described. For example, the determined operation amount may be used for a position change (movement) of the selector indicator. This point will be described with reference to Fig. 18. Fig. 18 is a diagram illustrating an example of use of the operation amount. In Fig. 18, a selector (indicator) that selects the GUI is used as an adaptation destination of the reflection of the operation amount (parameter) by the inspiration amount. In this manner, the operation amount may be used for GUI operation target switching. Note that, in Fig. 18, description of points similar to those in Fig. 1 will be omitted as appropriate.

First, in the example of Fig. 18, the user U1 utters WUW (Step S21). For example, the user U1 makes an utterance for activating voice recognition of the information processing system 1.

In the example of Fig. 18, the terminal device 10 activates the voice recognition according to the utterance of WUW by the user U1. The terminal device 10 performs processing of predetermined voice output at the time of the activation of the voice recognition. In the example of Fig. 18, as illustrated in the terminal device 10-1, "How can I help?" is output by voice. As described above, in Fig. 18, the terminal device 10 may be distinguished from the terminal devices 10-1, 10-2, and 10-3 according to the change in the display of the terminal device 10. Note that the terminal devices 10-1, 10-2, and 10-3 are the same terminal device 10, and will be referred to as a terminal device 10 in a case where the terminal devices are described without distinction.

In the display unit 16 of the terminal device 10, a plurality of objects is arranged side by side in a predetermined direction. In the example of Fig. 18, objects OB1 to OB3 are arranged in a vertical direction on the display unit 16 of the terminal device 10 as illustrated in the terminal device 10-1. For example, the objects OB1 to OB3 may be a plurality of input areas. Each of the objects OB1 to OB3 may be an input area of each of an Email destination, title, and sentence. The object OB1 may be the input area of the Email destination. The object OB2 may be the input area of the Email title. The object OB3 may be the input area of the Email sentence.

Furthermore, in the example of Fig. 18, a selector indicator ID21 which is an indicator (inspiration amount indicator) corresponding to the inspiration amount of the user U1 is not displayed on the display unit 16 of the terminal device 10 as illustrated in the terminal device 10-1. The selector indicator ID21 is a display object whose position changes according to the respiration of the user U1. In the terminal device 10, an object corresponding to the position is selected according to the position of the selector indicator ID21. Note that in the terminal device 10-1, the selector indicator ID21 may be displayed at an initial position.

The inspiration before the utterance of the user U1 is performed (Step S22). For example, the user U1 breathes before performing the utterance, and the information processing apparatus 100 acquires the respiration information indicating the respiration of the user U1. For example, the information processing apparatus 100 acquires the respiration information indicating the respiration of the user U1 from the terminal device 10 used by the user U1. The information processing apparatus 100 performs the determination processing of determining the operation amount regarding the operation by the respiration of the user U1 using the acquired respiration information. This point is similar to that in Fig. 1, and thus description thereof is omitted.

The information processing system 1 changes the position of the selector indicator ID21 displayed on the terminal device 10 using the operation amount (indicator parameter) determined by the information processing apparatus 100 (Step S23). For example, the information processing apparatus 100 transmits information of the determined operation amount (indicator parameter) to the terminal device 10. The terminal device 10 that has received the information of the operation amount (indicator parameter) from the information processing apparatus 100 changes the position of the displayed selector indicator ID21.

In the example of Fig. 18, the terminal device 10 changes the position of the selector indicator ID21 upward as illustrated in the terminal device 10-2. That is, the terminal device 10 moves the selector indicator ID21 upward. The terminal device 10 changes the display by changing the position of the selector indicator ID21 upward from the initial position using the operation amount (indicator parameter) received from the information processing apparatus 100. Therefore, the terminal device 10 selects the object OB2 corresponding to the position of the selector indicator ID21. For example, the terminal device 10 selects the object OB2 that is the input area of the Email title on the basis of the position of the selector indicator ID21. As described above, the information processing system 1 changes the selector indicator according to the inspiration amount, and changes the target input area (object). The information processing system 1 can switch the GUI operation target by changing the display or determining a target to be selected using the respiration of the user.

Note that the information processing apparatus 100 may transmit the content (corresponding to the display screen of the terminal device 10-2) in which the position of the selector indicator ID21 has been changed to the terminal device 10, and the terminal device 10 may display the received content.

Then, the user U1 makes an utterance (Step S24). For example, the user U1 voice-inputs information to be input to the object OB2, which is an input area selected on the basis of the selector indicator ID21, to the terminal device 10. In the example of Fig. 18, the user U1 utters "Hello" and performs voice input of information to the terminal device 10.

Then, the information processing system 1 performs processing of adding the input by the utterance of the user U1 to the object OB2 that is the input area selected on the basis of the selector indicator ID21 (Step S25). The terminal device 10 adds the character string "Hello" to the title of the Email corresponding to the object OB2. The terminal device 10 displays the character string "Hello" in the object OB2 which is the input area as illustrated in the terminal device 10-3. Therefore, the information processing system 1 enables information input to a target selected according to the inspiration amount of the user.

As described above, the information processing system 1 determines the operation amount by using the respiration of the user and uses the operation amount for processing corresponding to the operation performed by the user, and thus, it is possible to save the user from having to input the operation amount by voice and the like, and it is possible to reduce the operation load of the user.

[1-8-2. Example of switching between display and non-display of indicator]

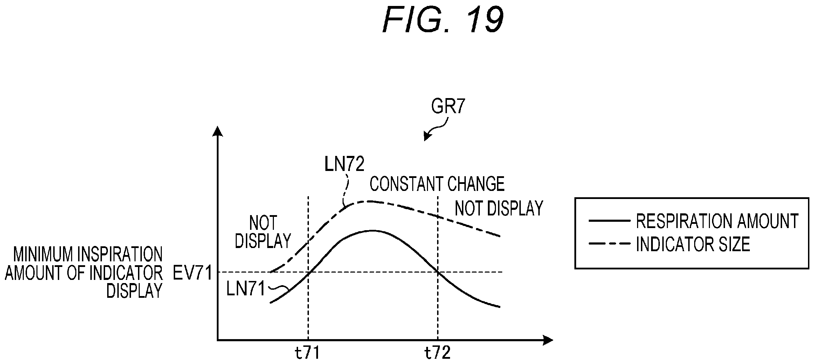

Furthermore, the indicator may not be displayed. For example, the selector indicator as illustrated in Fig. 18 may be switchable between display and non-display according to the respiration amount. For example, in the voice recognition processing, since a command not related to the GUI operation is also received, an area of indicator display and non-display may be set such that the indicator is not displayed unless the inspiration amount is equal to or larger than a certain amount. This point will be described with reference to Fig. 19. Fig. 19 is a diagram illustrating an example of switching between display and non-display of the indicator. Note that description of points similar to those in Fig. 2 and Figs. 12 to 16 will be omitted as appropriate.

A graph GR7 in Fig. 19 is a graph illustrating the relationship between the respiration of the user and the operation amount. Specifically, the graph GR7 in Fig. 19 is a graph illustrating a relationship between the inspiration amount of the user and the size of the indicator (indicator size) on the basis of the operation amount. In the graph GR7 in Fig. 19, a vertical axis represents the inspiration amount or the size of the indicator, and a horizontal axis represents time. Furthermore, in the graph GR7 in Fig. 19, a line (line LN71) indicating the respiration amount is indicated by a solid line, and a line (line LN72) indicating the indicator size is indicated by a one-dot chain line.

A threshold EV71 in the graph GR7 in Fig. 19 is a value indicating the minimum inspiration amount of the indicator display. For example, the information processing system 1 displays the indicator in a case where the respiration amount is equal to or larger than the threshold EV71, and does not display the indicator in a case where the respiration amount is less than the threshold EV71. The information processing apparatus 100 compares the current respiration amount with the threshold EV71, and determines whether to display or not to display the indicator on the basis of the comparison result. In a case where the current respiration amount is equal to or larger than the threshold EV71, the information processing apparatus 100 determines to display the indicator. In a case where the current respiration amount is less than the threshold EV71, the information processing apparatus 100 determines not to display the indicator.

In the example of Fig. 19, since the current respiration amount is less than the threshold EV71 until the time t71, the information processing apparatus 100 determines not to display the indicator. The information processing system 1 does not display the indicator until the time t71. For example, the terminal device 10 does not display the indicator until the time t71.

In the example of Fig. 19, the information processing apparatus 100 determines to display the indicator because the current respiration amount is equal to or larger than the threshold EV71 from the time t71 to the time t72. The information processing system 1 displays the indicator from the time t71 to the time t72. For example, the terminal device 10 displays the indicator from the time t71 to the time t72. At time the t71, the terminal device 10 switches the indicator from non-display to display.

In the example of Fig. 19, since the current respiration amount is less than the threshold EV71 after the time t72, the information processing apparatus 100 determines not to display the indicator. The information processing system 1 does not display the indicator after the time t72. For example, the terminal device 10 does not display the indicator after the time t72. At time the t72, the terminal device 10 switches the indicator from display to non-display.

For example, when the indicator is not displayed, the information processing system 1 processes the voice utterance of the user as an input or a command to the selected GUI. Furthermore, for example, when the indicator is not displayed, the information processing system 1 processes the voice utterance of the user as a general command not related to the GUI.

As described above, the information processing system 1 can perform appropriate processing according to the indicator display/non-display by switching the processing using the voice utterance of the user according to the indicator display/non-display state.

[1-8-3. Example of switching GUI operation target]

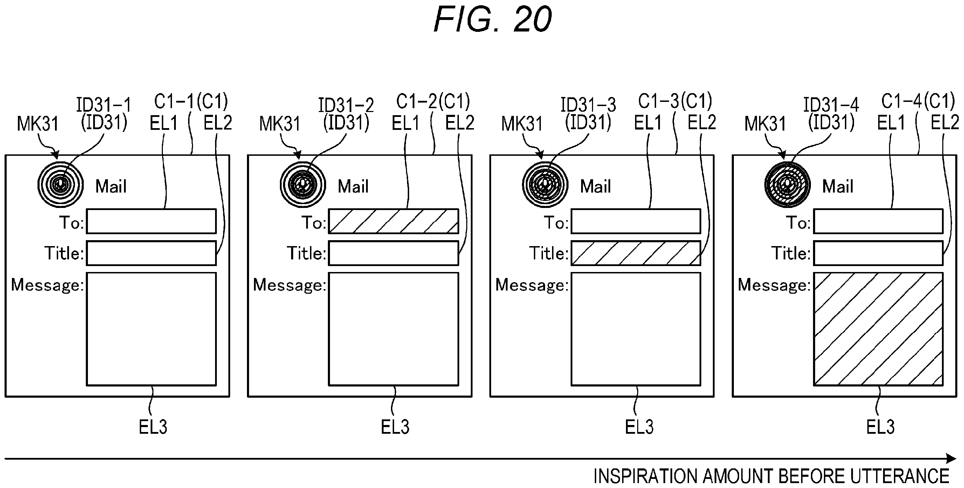

Furthermore, the operation amount may be used to switch the GUI operation target. This point will be described with reference to Fig. 20. Fig. 20 is a diagram illustrating an example of switching of the GUI operation target.

Fig. 20 illustrates an example of GUI operation target switching. In Fig. 20, the contents CT1 may be distinguished from the contents CT1-1, CT1-2, CT1-3, and CT1-4 according to the change of the display. Note that the content CT1-1, CT1-2, CT1-3, and CT1-4 are the same content CT1, and will be described as the content CT1 in a case where it is described without distinction. For example, the content CT1 is displayed on the display unit 16 of the terminal device 10.

The content CT1 includes a mark MK31 and elements EL1, EL2, and EL3. The mark MK31 is a figure in which a plurality of circles having different sizes is arranged around the indicator ID31. The size of the indicator ID31 is changed according to the respiration of the user. The indicator ID31 is a display object whose size changes according to the respiration of the user U1. That is, the indicator ID31 is a display object indicating the operation amount determined on the basis of the respiration of the user by its size. For example, the indicator ID31-1 illustrated in content CT1-1 indicates an initial state of the indicator ID31. As described above, in Fig. 1, the indicator ID31 may be distinguished from the indicators ID31-1, ID31-2, ID31-3, and ID31-4 in accordance with the change in the display of the indicator ID31. Note that the indicators ID31-1, ID31-2, ID31-3, and ID31-4 will be referred to as the indicator ID31 in a case where the indicators are described without distinction.

The element EL1 is an input area corresponding to the destination (To) of Email. The element EL2 is an input area corresponding to the title (Title) of Email. The element EL3 is an input area corresponding to the text (Message) of Email. As illustrated in Fig. 20, it is assumed that the area occupied by the element EL1, the element EL2, and the element EL3 increases in this order, and the amount of information input to the element EL1, the element EL2, and the element EL3 increases in this order.

In the example of Fig. 20, similarly to Fig. 1, the information processing system 1 changes the display of the indicator ID31 according to the respiration of the user. Furthermore, in the example of Fig. 20, the information processing system 1 changes an input area (element) to be selected according to the respiration of the user, similarly to Fig. 18. The content CT1-1 in Fig. 20 indicates a non-selected state in which the input area (element) is not selected. In this case, the information processing system 1 recognizes the utterance of the user as a general-purpose command. Furthermore, the contents CT1-1 to CT1-4 indicate a change in the indicator ID31 and the selected input area (element) according to a change in the inspiration amount before the utterance of the user.

For example, the information processing system 1 changes the display mode of the content CT1 from the content CT1-1 to the content CT1-2 according to the increase in the respiration amount of the user. The information processing system 1 changes the display size of the indicator ID31 from the indicator ID31-1 to the indicator ID31-2 according to the increase in the respiration amount of the user. Furthermore, the information processing system 1 selects the element EL1, which is an input area corresponding to the destination (To) of Email, in accordance with an increase in the respiration amount of the user. As described above, the information processing system 1 changes the size of the indicator ID31 according to the inspiration amount of the user, and selects the input area (element). For example, in a case where the utterance of the user is performed in the state of the content CT1-2, the input information on the basis of the utterance of the user is added to the element EL1 which is the input area corresponding to the destination (To) of Email.

Furthermore, for example, the information processing system 1 changes the display mode of the content CT1 from the content CT1-2 to the content CT1-3 according to the increase in the respiration amount of the user. The information processing system 1 changes the display size of the indicator ID31 from the indicator ID31-2 to the indicator ID31-3 according to the increase in the respiration amount of the user. Furthermore, the information processing system 1 changes the selected input area (element) from the input area (element EL1) corresponding to the destination (To) of Email to the input area (element EL2) corresponding to the title (Title) of Email according to the increase in the respiration amount of the user. In this manner, the information processing system 1 changes the size of the indicator ID31 according to the inspiration amount of the user, and changes the selected input area (element). For example, in a case where the utterance of the user is performed in the state of the content CT1-3, the input information on the basis of the utterance of the user is added to the element EL2 that is the input area corresponding to the title (Title) of Email.

Furthermore, for example, the information processing system 1 changes the display mode of the content CT1 from the content CT1-3 to the content CT1-4 according to the increase in the respiration amount of the user. The information processing system 1 changes the display size of the indicator ID31 from the indicator ID31-3 to the indicator ID31-4 according to the increase in the respiration amount of the user. Furthermore, the information processing system 1 changes the selected input area (element) from the input area (element EL2) corresponding to the title (Title) of Email to the input area (element EL3) corresponding to the text (Message) of Email in accordance with an increase in the respiration amount of the user. In this manner, the information processing system 1 changes the size of the indicator ID31 according to the inspiration amount of the user, and changes the selected input area (element). For example, in a case where the utterance of the user is performed in the state of the content CT1-4, the input information according to the utterance of the user is added to the element EL3 that is the input area corresponding to the text (Message) of Email.

In this manner, the information processing system 1 displays the indicator whose size changes according to the respiration amount of the user and a plurality of elements (input areas) selected according to the respiration amount of the user. Therefore, the information processing system 1 can allow the user to intuitively grasp the relationship between the change in the respiration of the user and the change in the selection of the element, so that the user can more easily perform the element selection by the respiration. Therefore, since the information processing system 1 can save the user from inputting by voice and the like, the operation load of the user can be reduced, and the usability can be improved.

[2. Other Embodiments]

The processing according to each of the above-described embodiments may be performed in various different forms (modifications) other than the above-described embodiments and modification examples.

[2.-1. Modification example (example in which determination processing and the like are performed on client side)]

In one embodiment, as an example of the system configuration, the case where the information processing apparatus 100 determines or predicts the operation amount has been described, but the terminal device 10 may determine or predict the operation amount. That is, the terminal device 10, which is a device on a client side, may be an information processing apparatus that determines and predicts the operation amount described above. As described above, the system configuration of the information processing system 1 is not limited to the configuration in which the information processing apparatus 100, which is an apparatus on a server side, determines and predicts the operation amount, and may be a configuration in which the terminal device 10, which is an apparatus on the client side, determines and predicts the operation amount described above.

In a case where the terminal device 10 is an information processing apparatus that determines or predicts the operation amount described above, in the information processing system 1, the operation amount is determined or predicted on the client side (terminal device 10). Then, the server side (the information processing apparatus 100) acquires information of the operation amount and the predicted operation amount from the terminal device 10 and performs various types of processing. In this case, the terminal device 10 may include a prediction unit that implements a function similar to that of the prediction unit 132 described above and a determination unit that implements a function similar to that of the determination unit 133. Furthermore, in this case, the information processing apparatus 100 may not include the prediction unit 132 or the determination unit 133.

Furthermore, the information processing system 1 may have a system configuration in which the operation amount is determined on the client side (terminal device 10) and the operation amount is predicted on the server side (information processing apparatus 100). In this case, the terminal device 10 which is the device on the client side may be an information processing apparatus that performs the above-described operation amount determination processing, and the information processing apparatus 100 which is the device on the server side may be an information processing apparatus that performs the above-described operation amount prediction determination processing. In this case, the determination unit of the terminal device 10 performs determination processing, and the prediction unit 132 of the information processing apparatus 100 performs prediction processing.

Note that the above is an example, and any device may perform each processing in the information processing system 1. As described above, the information processing system 1 may have a system configuration in which either the client-side device (terminal device 10) or the server-side device (information processing apparatus 100) performs each processing.

[2-2. Configuration example of information processing apparatus according to modification example]

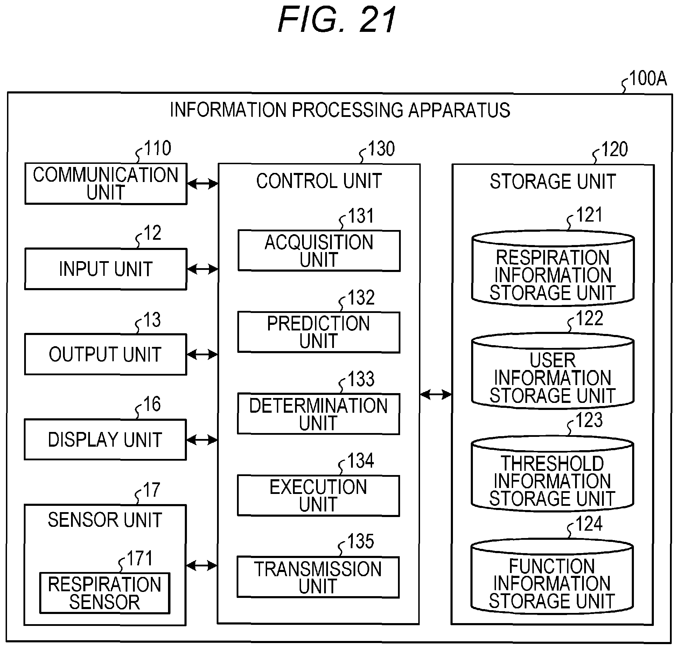

Note that, in a case where the operation amount is determined on the client side (terminal device) as described above, the information processing apparatus that determines the operation amount functions as the terminal device. In this case, the terminal device which is the device on the client side has a function of determining the operation amount and a function of performing display according to the operation amount. This point will be described with reference to Fig. 21. Fig. 21 is a diagram illustrating a configuration example of an information processing apparatus according to a modification example of the present disclosure. In this case, the information processing system 1 may include an information processing apparatus 100A that is a client side terminal device and a server apparatus that communicates various types of information with the information processing apparatus 100A.

The information processing apparatus 100A used as a client side apparatus (terminal device) has a function of determining an operation amount and a function of performing display according to the operation amount. For example, the information processing apparatus 100A acquires various types of information from a server apparatus that provides a voice recognition service, and executes various types of processing using the acquired information. For example, the information processing apparatus 100A transmits the utterance information of the user to the server apparatus, acquires information indicating a voice recognition result from the server apparatus, and executes various types of processing using the acquired information. Note that, in the following description of the information processing apparatus 100A, the points similar to those of the information processing apparatus 100 illustrated in Fig. 6 and the terminal device 10 illustrated in Fig. 8 are denoted by the similar reference numerals, and the description thereof will be appropriately omitted.

As illustrated in Fig. 21, the information processing apparatus 100A includes the communication unit 110, the input unit 12, the output unit 13, the storage unit 120, the control unit 130, the display unit 16, and the sensor unit 17.

The communication unit 110 transmits and receives information to and from the server apparatus. Various operations are input from the user to the input unit 12. The output unit 13 outputs various types of information. The user information storage unit 122 stores various types of information of the user who uses the information processing apparatus 100A.

The acquisition unit 131 of the information processing apparatus 100A has the functions described with reference to Fig. 6 and functions similar to those of the reception unit 151 and the acceptance unit 153. The acquisition unit 131 receives various types of information. The acquisition unit 131 receives various types of information from an external information processing apparatus. The acquisition unit 131 receives various types of information from another information processing apparatus such as a server apparatus.

The acquisition unit 131 acquires information detected by the sensor unit 17. The acquisition unit 131 acquires information detected by respiration sensor 171 of sensor unit 17. The acquisition unit 131 receives, from the server apparatus, information instructing the activation of the voice recognition. The acquisition unit 131 receives, from the server apparatus, information instructing the activation of the voice recognition application.

The acquisition unit 131 receives execution instructions of various functions from the server apparatus. For example, the acquisition unit 131 receives information designating a function from the server apparatus as a function execution instruction. The acquisition unit 131 receives the content. The acquisition unit 131 receives the content to be displayed from the server apparatus.

The acquisition unit 131 receives various types of information. The acquisition unit 131 receives an input by the user via the input unit 12. The acquisition unit 131 receives an utterance by the user as an input. The acquisition unit 131 receives the operation by the user. The acquisition unit 131 receives the operation of the user on the information displayed by the display unit 16. The acquisition unit 131 receives a character input by the user.

The execution unit 134 of the information processing apparatus 100A has the functions described with reference to Fig. 6 and functions similar to those of the execution unit 152. The execution unit 134 executes various types of processing on the basis of information from the server apparatus. The execution unit 134 executes various types of processing in accordance with an instruction from the server apparatus.

The transmission unit 135 of the information processing apparatus 100A has the functions described with reference to Fig. 6 and the functions of the transmission unit 154. The transmission unit 135 transmits various types of information on the basis of information from another information processing apparatus such as a server apparatus. The transmission unit 135 transmits the operation amount determined by the determination unit 133 to the server apparatus. The transmission unit 135 transmits the operation amount (predicted operation amount) predicted by the prediction unit 132 to the server apparatus.

The transmission unit 135 transmits respiration information indicating the respiration of the user to the server apparatus. The transmission unit 135 transmits the respiration information including the inspiration amount of the user to the server apparatus. The transmission unit 135 transmits the respiration information including the change amount in the respiration of the user to the server apparatus. The transmission unit 135 transmits, to the server apparatus, the utterance information indicating the utterance by the user after the respiration of the user. The transmission unit 135 transmits, to the server apparatus, the utterance information indicating the utterance by the user before the respiration of the user.

The transmission unit 135 transmits the sensor information detected by the sensor unit 17 to the server apparatus. The transmission unit 135 transmits the respiration information of user U1 detected by the respiration sensor 171 of the sensor unit 17 to the server apparatus. The transmission unit 135 transmits the input information input by the user to the server apparatus. The transmission unit 135 transmits the input information into which the voice of the user is input to the server apparatus. The transmission unit 135 transmits the input information input by the operation of the user to the server apparatus.

The display unit 16 has the functions described with reference to Fig. 8. The display unit 16 displays the information received from the server apparatus. The display unit 16 displays information indicating the operation amount determined by the determination unit 133. The display unit 16 displays the indicator corresponding to the operation amount.

[2-3. Others]

Furthermore, among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the document and the drawings can be arbitrarily changed unless otherwise specified. For example, the various types of information illustrated in each figure are not limited to the illustrated information.

Furthermore, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like.

Furthermore, the above-described embodiments and modification examples can be appropriately combined within a range in which the processing contents do not contradict each other.

Furthermore, the effects described in the present specification are merely examples and are not limited, and other effects may be provided.

[3. Effects according to present disclosure]

As described above, the information processing apparatus (in one embodiment, the information processing apparatuses 100 and 100A) according to the present disclosure includes the acquisition unit (the acquisition unit 131 in one embodiment) and the determination unit (the determination unit 133 in one embodiment). The acquisition unit acquires the respiration information indicating the respiration of the user. The determination unit determines the operation amount regarding the operation by the user on the basis of the respiration of the user indicated by the respiration information acquired by the acquisition unit.

As described above, the information processing apparatus according to the present disclosure determines the operation amount regarding the operation by the user on the basis of the respiration of the user, so that it is possible to save the trouble of inputting the operation amount by the user, and it is possible to reduce the operation load of the user.

Furthermore, the determination unit determines the operation amount according to the amount regarding the respiration of the user. In this manner, the information processing apparatus can reduce the operation load of the user by determining the operation amount according to the amount regarding the respiration of the user.

Furthermore, the acquisition unit acquires the respiration information including the inspiration amount of the user. The determination unit determines the operation amount on the basis of the inspiration amount. In this manner, the information processing apparatus can accurately determine the operation amount by using the inspiration amount of the respiration of the user.

Furthermore, the acquisition unit acquires the respiration information including the change amount of the respiration of the user. The determination unit determines the operation amount on the basis of the change amount. In this manner, the information processing apparatus can accurately predict the presence or absence of the utterance of the user by using the change amount in the respiration of the user.

Furthermore, the determination unit increases the operation amount according to any one of the inspiration and expiration of the user. As described above, the information processing apparatus increases the operation amount in conjunction with the respiration of the user, so that it is possible to save the trouble of inputting the operation amount by the user, and thus, it is possible to reduce the operation load of the user.

Furthermore, the determination unit decreases the operation amount according to the other of the inspiration and the expiration of the user different from one of the inspiration and the expiration of the user. As described above, the information processing apparatus uses the other of the inspiration and the expiration of the user, which is different from the one used to increase the operation amount, for the reduction of the operation amount, so that it is possible to save the user from inputting the increase or decrease of the operation amount, and it is possible to reduce the operation load of the user.

Furthermore, the determination unit increases the operation amount according to the inspiration of the user. As described above, the information processing apparatus increases the operation amount according to the inspiration of the user, so that the trouble of inputting the operation amount by the user can be saved, and the operation load of the user can be reduced.

Furthermore, the determination unit increases the operation amount in accordance with an increase in the inspiration amount at the time of the inspiration of the user. As described above, the information processing apparatus increases the operation amount according to the increase in the inspiration amount at the time of inspiration of the user, so that it is possible to save time and effort for the user to input the operation amount, and it is thus possible to reduce an operation load on the user.

Furthermore, in a case where the comparison result between the increase amount of the inspiration of the user and the threshold satisfies the predetermined condition, the determination unit increases the operation amount according to the increase amount of the inspiration. As described above, in a case where the comparison result between the increase amount of the inspiration of the user and the threshold satisfies the predetermined condition, the information processing apparatus can more appropriately increase the operation amount in conjunction with the inspiration of the user by increasing the operation amount according to the increase amount of the inspiration.

Furthermore, the determination unit constantly decreases the operation amount while the expiration of the user is performed. As described above, the information processing apparatus can use the time during which the user performs the expiration for reducing the operation amount by constantly reducing the operation amount while the user performs the expiration, so that the operation load of the user can be reduced.

Furthermore, the determination unit decreases the operation amount according to the expiration of the user. As described above, the information processing apparatus reduces the operation amount according to the expiration of the user, so that it is possible to save the trouble of the user inputting the operation amount, and thus, it is possible to reduce the operation load of the user.

Furthermore, the determination unit decreases the operation amount according to a decrease in the inspiration amount at the time of the expiration by the user. As described above, the information processing apparatus reduces the operation amount according to the decrease in the inspiration amount at the time of the expiration by the user, so that it is possible to save time and effort for the user to input the operation amount, and thus it is possible to reduce an operation load on the user.

Furthermore, in a case where the comparison result between the increase amount of the expiration of the user and the threshold satisfies a predetermined condition, the determination unit decreases the operation amount according to the increase amount of the expiration. As described above, in a case where the comparison result between the increase amount of the expiration of the user and the threshold satisfies the predetermined condition, the information processing apparatus can more appropriately decrease the operation amount in conjunction with the expiration of the user by decreasing the operation amount according to the increase amount of the expiration.

Furthermore, the acquisition unit acquires the utterance information indicating the utterance by the user after the respiration of the user. The determination unit determines the object to be operated by the user on the basis of the utterance information. In this manner, the information processing apparatus can appropriately determine the target to which the operation amount is applied by determining the object to be operated by the user using the utterance after the respiration of the user. Therefore, the information processing apparatus determines the operation amount by the respiration of the user and determines the operation target by the utterance of the user, so that the user can perform the operation by uttering only the operation target, and thus, it is possible to reduce the operation load of the user.

Furthermore, the acquisition unit acquires the utterance information indicating the utterance by the user before respiration of the user. The determination unit determines the object to be operated by the user on the basis of the utterance information. In this manner, the information processing apparatus can appropriately determine the target to which the operation amount is applied by determining the object to be operated by the user using the utterance before the respiration of the user. Therefore, the information processing apparatus determines the operation amount by the respiration of the user and determines the operation target by the utterance of the user, so that the user can perform the operation by uttering only the operation target, and thus, it is possible to reduce the operation load of the user.

Furthermore, the determination unit determines an operation amount corresponding to a parameter of the device. As described above, the information processing apparatus determines the operation amount corresponding to the parameter of the device, so that it is possible to save time and effort for the user to operate the parameter input of the device or the like, and thus, it is possible to reduce the operation load of the user.

Furthermore, the determination unit determines the operation amount corresponding to the position change of the target displayed on the screen. As described above, the information processing apparatus determines the operation amount corresponding to the position change of the target displayed on the screen, and thus, it is possible to save the trouble such as the operation of changing the position of the target by the user, and it is possible to reduce the operation load of the user.

Furthermore, the information processing apparatus according to the present disclosure includes the display unit (the display unit 16 in one embodiment). The display unit displays information indicating the operation amount determined by the determination unit. In this manner, by displaying the information indicating the operation amount, the information processing apparatus can allow the user to visually recognize what state the operation amount by respiration is, and thus, can improve usability.

Furthermore, the display unit displays the indicator corresponding to the operation amount. In this manner, the information processing apparatus can allow the user to intuitively understand the operation amount by displaying the indicator corresponding to the operation amount, and thus, it is possible to improve usability.

[4. Hardware configuration]

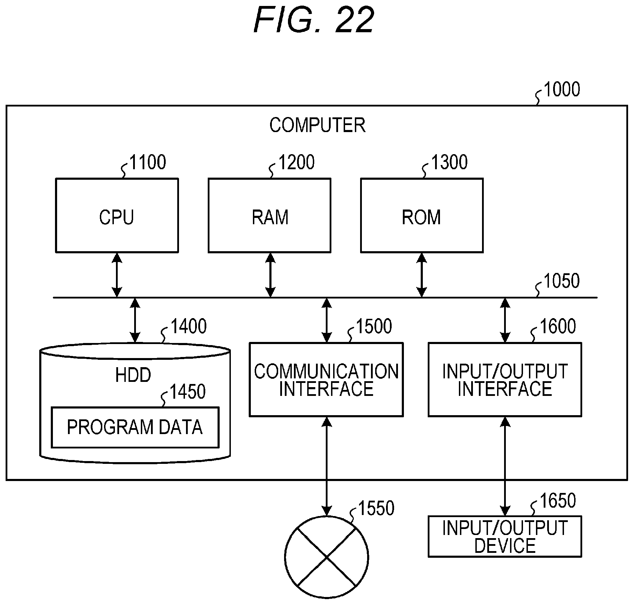

The information devices such as the information processing apparatuses 100 and 100A and the terminal device 10 according to each embodiment described above are implemented by a computer 1000 having a configuration as illustrated in Fig. 22, for example. Fig. 22 is a hardware configuration diagram illustrating an example of the computer 1000 that implements the functions of the information processing apparatus. Hereinafter, the information processing apparatus 100 according to one embodiment will be described as an example. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records an information processing program according to the present disclosure as an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting the input/output device 1650 and the computer 1000. For example, the CPU 1100 receives data from an input device such as a keyboard and a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program and the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

For example, in a case where the computer 1000 functions as the information processing apparatus 100 according to one embodiment, the CPU 1100 of the computer 1000 implements the functions of the control unit 130 and the like by executing the information processing program loaded on the RAM 1200. Furthermore, the HDD 1400 stores an information processing program according to the present disclosure and data in the storage unit 120. Note that the CPU 1100 reads the program data 1450 from the HDD 1400 and executes the program data, but as another example, these programs may be acquired from another device via the external network 1550.

Note that the present technology may also be configured as below.

(1) An information processing apparatus including:

an acquisition unit that acquires respiration information indicating respiration of a user; and
a determination unit that determines an operation amount regarding an operation by the user on the basis of the respiration of the user indicated by the respiration information acquired by the acquisition unit.

(2) The information processing apparatus according to (1), in which
the determination unit determines the operation amount according to an amount regarding the respiration of the user.
(3) The information processing apparatus according to (1) or (2), in which

the acquisition unit acquires the respiration information including an inspiration amount of the user, and
the determination unit determines the operation amount on the basis of the inspiration amount.

(4) The information processing apparatus according to any one of (1) to (3), in which

the acquisition unit acquires the respiration information including a change amount of the respiration of the user, and
the determination unit determines the operation amount on the basis of the change amount.

(5) The information processing apparatus according to any one of (1) to (4), in which
the determination unit increases the operation amount according to any one of inspiration and expiration of the user.
(6) The information processing apparatus according to (5), in which
the determination unit reduces the operation amount according to the other of the inspiration and the expiration of the user different from the one.
(7) The information processing apparatus according to (5) or (6), in which
the determination unit increases the operation amount according to the inspiration of the user.
(8) The information processing apparatus according to (5) or (7), in which
the determination unit increases the operation amount in accordance with an increase in an inspiration amount during the inspiration of the user.
(9) The information processing apparatus according to (7) or (8), in which
the determination unit increases the operation amount according to an increase amount of the inspiration in a case where a comparison result between the increase amount of the inspiration of the user and a threshold satisfies a predetermined condition.
(10) The information processing apparatus according to any one of (7) to (9), in which
the determination unit constantly reduces the operation amount while expiration of the user is performed.
(11) The information processing apparatus according to any one of (7) to (9), in which
the determination unit reduces the operation amount according to expiration of the user.
(12) The information processing apparatus according to (11), in which

the determination unit reduces the operation amount according to a decrease in the inspiration amount during the expiration of the user.

(13) The information processing apparatus according to (11) or (12), in which
the determination unit reduces the operation amount according to an increase amount of expiration in a case where a comparison result between the increase amount of the expiration of the user and a threshold satisfies a predetermined condition.

(14) The information processing apparatus according to any one of (1) to (13), in which

the acquisition unit acquires utterance information indicating an utterance by the user after the respiration of the user, and
the determination unit determines an object to be operated by the user on the basis of the utterance information.

(15) The information processing apparatus according to any one (1) to (13), in which

the acquisition unit acquires utterance information indicating an utterance by the user before the respiration of the user, and
the determination unit determines an object to be operated by the user on the basis of the utterance information.

(16) The information processing apparatus according to any one of (1) to (15), in which
the determination unit determines the operation amount corresponding to a parameter of a device.

(17) The information processing apparatus according to any one of (1) to (15), in which
the determination unit determines the operation amount corresponding to a position change of an object displayed on a screen.

(18) The information processing apparatus according to any one of (1) to (17), further including
a display unit that displays information indicating the operation amount determined by the determination unit.

(19) The information processing apparatus according to (18), in which
the display unit includes displaying an indicator corresponding to the operation amount.

(20) An information processing method including:

acquiring respiration information indicating respiration of a user; and
determining an operation amount regarding an operation by the user on the basis of the respiration of the user indicated by the acquired respiration information.

REFERENCE SIGNS LIST

| | |
|---|---|
| 1 | Information processing system |
| 100, 100A | Information processing apparatus |
| 110 | Communication unit |
| 120 | Storage unit |
| 121 | Respiration information storage unit |
| 122 | User information storage unit |
| 123 | Threshold information storage unit |
| 124 | Function information storage unit |
| 130 | Control unit |
| 131 | Acquisition unit |
| 132 | Prediction unit |
| 133 | Determination unit |
| 134 | Execution unit |
| 135 | Transmission unit |
| 10 | Terminal device |
| 11 | Communication unit |
| 12 | Input unit |
| 13 | Output unit |
| 14 | Storage unit |
| 15 | Control unit |
| 151 | Reception unit |

| 152 | Execution unit |
| 153 | Acceptance unit |
| 154 | Transmission unit |
| 16 | Display unit |
| 17 | Sensor unit |
| 171 | Respiration sensor |

**Claims**

1. An information processing apparatus comprising:

   an acquisition unit that acquires respiration information indicating respiration of a user; and
   a determination unit that determines an operation amount regarding an operation by the user on a basis of the respiration of the user indicated by the respiration information acquired by the acquisition unit.

2. The information processing apparatus according to claim 1, wherein
   the determination unit determines the operation amount according to an amount regarding the respiration of the user.

3. The information processing apparatus according to claim 1, wherein

   the acquisition unit acquires the respiration information including an inspiration amount of the user, and
   the determination unit determines the operation amount on a basis of the inspiration amount.

4. The information processing apparatus according to claim 1, wherein

   the acquisition unit acquires the respiration information including a change amount of the respiration of the user, and
   the determination unit determines the operation amount on a basis of the change amount.

5. The information processing apparatus according to claim 1, wherein
   the determination unit increases the operation amount according to any one of inspiration and expiration of the user.

6. The information processing apparatus according to claim 5, wherein
   the determination unit reduces the operation amount according to the other of the inspiration and the expiration of the user different from the one.

7. The information processing apparatus according to claim 5, wherein
   the determination unit increases the operation amount according to the inspiration of the user.

8. The information processing apparatus according to claim 5, wherein
   the determination unit increases the operation amount in accordance with an increase in an inspiration amount during the inspiration of the user.

9. The information processing apparatus according to claim 7, wherein
   the determination unit increases the operation amount according to an increase amount of the inspiration in a case where a comparison result between the increase amount of the inspiration of the user and a threshold satisfies a predetermined condition.

10. The information processing apparatus according to claim 7, wherein
    the determination unit constantly reduces the operation amount while expiration of the user is performed.

11. The information processing apparatus according to claim 7, wherein
    the determination unit reduces the operation amount according to expiration of the user.

12. The information processing apparatus according to claim 11, wherein
    the determination unit reduces the operation amount according to a decrease in the inspiration amount during the expiration of the user.

**13.** The information processing apparatus according to claim 11, wherein
the determination unit reduces the operation amount according to an increase amount of expiration in a case where a comparison result between the increase amount of the expiration of the user and a threshold satisfies a predetermined condition.

**14.** The information processing apparatus according to claim 1, wherein

the acquisition unit acquires utterance information indicating an utterance by the user after the respiration of the user, and
the determination unit determines an object to be operated by the user on a basis of the utterance information.

**15.** The information processing apparatus according to claim 1, wherein

the acquisition unit acquires utterance information indicating an utterance by the user before the respiration of the user, and
the determination unit determines an object to be operated by the user on a basis of the utterance information.

**16.** The information processing apparatus according to claim 1, wherein
the determination unit determines the operation amount corresponding to a parameter of a device.

**17.** The information processing apparatus according to claim 1, wherein
the determination unit determines the operation amount corresponding to a position change of an object displayed on a screen.

**18.** The information processing apparatus according to claim 1, further comprising
a display unit that displays information indicating the operation amount determined by the determination unit.

**19.** The information processing apparatus according to claim 18, wherein
the display unit includes displaying an indicator corresponding to the operation amount.

**20.** An information processing method comprising:

acquiring respiration information indicating respiration of a user; and
determining an operation amount regarding an operation by the user on a basis of the respiration of the user indicated by the acquired respiration information.

EP 4 099 317 A1

# FIG. 1

"How can I help?"

ID1(ID1-1)  10-1(10)

WUW → S11 → [16] → S12 → INSPIRATION BEFORE UTTERANCE → S13 → ID1(ID1-2) 10-2(10) [16] → S14 → IN11 "Turn up volume" → S15 → 10-3(10) volume [16]

# FIG. 2

GR1

LN12

CONSTANT
CHANGE

LN11

INCREASE | DECREASE
AMOUNT | AMOUNT

IL11

t11
MAXIMUM
INSPIRATION

DL11

——— RESPIRATION AMOUNT
– – – INDICATOR SIZE

# FIG. 3

ID1    OT1  OT2  OT3    10

20   10   32

16

IN21

"Change
TV volume"

## FIG. 4

ID1   OT1 OT2 OT3   10

IN31

"Turn up
TV volume"

IN32

"Turn down
music"

5   10   20

16

## FIG. 5

1

50-1(50)

DEVICE

100

INFORMATION
PROCESSING
APPARATUS

N

50-2(50)

DEVICE

50-3(50)

DEVICE

10

TERMINAL DEVICE

# FIG. 6

INFORMATION PROCESSING APPARATUS ⟨100

| COMMUNICATION UNIT ⟨110 | CONTROL UNIT ⟨130 | STORAGE UNIT ⟨120 |

CONTROL UNIT ⟨130

ACQUISITION UNIT ⟨131

PREDICTION UNIT ⟨132

DETERMINATION UNIT ⟨133

EXECUTION UNIT ⟨134

TRANSMISSION UNIT ⟨135

STORAGE UNIT ⟨120

RESPIRATION INFORMATION STORAGE UNIT ⟨121

USER INFORMATION STORAGE UNIT ⟨122

THRESHOLD INFORMATION STORAGE UNIT ⟨123

FUNCTION INFORMATION STORAGE UNIT ⟨124

# FIG. 7

123

| THRESHOLD ID | USE | THRESHOLD NAME | VALUE | ... |
|---|---|---|---|---|
| TH1 | INCREASE AMOUNT THRESHOLD | B_increase_thres | VL1 | ... |
| TH2 | EXPIRATION AMOUNT THRESHOLD | B_decrease_thres | VL2 | ... |
| ... | ... | ... | ... | ... |

# FIG. 8

TERMINAL DEVICE ⌐10

CONTROL UNIT ⌐15

COMMUNICATION UNIT ⌐11

RECEPTION UNIT ⌐151

STORAGE UNIT ⌐14

INPUT UNIT ⌐12

EXECUTION UNIT ⌐152

DISPLAY UNIT ⌐16

ACCEPTANCE UNIT ⌐153

OUTPUT UNIT ⌐13

TRANSMISSION UNIT ⌐154

SENSOR UNIT ⌐17

RESPIRATION SENSOR ⌐171

# FIG. 9

START

ACQUIRE RESPIRATION INFORMATION INDICATING RESPIRATION OF USER ⌐S101

DETERMINE OPERATION AMOUNT REGARDING OPERATION BY USER ON BASIS OF RESPIRATION OF USER INDICATED BY RESPIRATION INFORMATION ⌐S102

END

# FIG. 10

*FIG. 11*

```
                    ┌──────────┐
                    │  START   │
                    └────┬─────┘
                         │          ⌐S301
                ┌────────▼─────────┐
                │  Wuw OR TRIGGER  │
                └────────┬─────────┘
                         │          ⌐S302
         ┌──────┌────────▼─────────┐
         │      │ ACQUIRE INSPIRATION/           │
         │      │ EXPIRATION DATA (UNIT TIME)    │
         │      └────────┬─────────┘
         │               │          ⌐S303
         │      ┌─────────▼──────────────────────┐
         │      │ CALCULATE PARAMETER SUCH AS     │
         │      │ INCREASE AMOUNT AND DECREASE    │
         │      │ AMOUNT                          │
         │      └─────────┬──────────────────────┘
         │                │         ⌐S304
         │      ┌─────────▼──────────────────────┐
         │      │ DETERMINE PROCESSING CONDITION  │
         │      │ SUCH AS RAPID INSPIRATION AND   │
         │      │ EXPIRATION                      │
         │      └─────────┬──────────────────────┘
         │                │         ⌐S305
         │      ┌─────────▼──────────────────────┐
         │      │ REFLECT PARAMETER ON GUI        │
         │      └─────────┬──────────────────────┘
         │                │         ⌐S306
         │  No    ◇───────▼───────◇
         └────────  HAS UTTERANCE
                    BEEN STARTED?
                    ◇───────┬───────◇
                            │ Yes     ⌐S307
                   ┌────────▼─────────┐
                   │ UTTERANCE OF USER│
                   └────────┬─────────┘
                            │          ⌐S308
                    ◇───────▼───────◇   No
                    IS PARAMETER      ─────────────┐
                    REQUIRED ACTION?               │  ⌐S309
                    ◇───────┬───────◇     ┌────────▼────────┐
                            │ Yes         │ EXECUTE ACTION  │
                            │             └────────┬────────┘
                            │  ⌐S310               │
                    ◇───────▼───────◇   No          │
                    IS THERE          ───────┐      │
                    LINGUISTIC PARAMETER     │      │
                    INFORMATION?             │      │
                    ◇───────┬───────◇        │      │
                            │ Yes  ⌐S312     │⌐S311 │
         ┌──────────────────▼──────────┐ ┌──▼──────────────┐
         │ ACQUIRE PARAMETER FROM       │ │ USE RESPIRATION │
         │ LINGUISTIC INFORMATION AND   │ │ DATA AS         │
         │ EXECUTE PARAMETER            │ │ EXECUTION       │
         │                              │ │ PARAMETER       │
         └──────────────────┬──────────┘ └──┬──────────────┘
                            │                │
                            └───────┬────────┘
                            ┌───────▼────────┐
                            │     END        │
                            └────────────────┘
```

# FIG. 12

GR2

LN22

CONSTANT
CHANGE

RESPIRATION AMOUNT
--- INDICATOR SIZE

LN23

INCREASE
AMOUNT   DECREASE
AMOUNT

LN21

IL21   t21
MAXIMUM
INSPIRATION   DL21

# FIG. 13

GR3

LN32

RESPIRATION AMOUNT
--- INDICATOR SIZE

LN33

DECREASE
AMOUNT

LN31   t31
MAXIMUM
INSPIRATION   DL31

# FIG. 14

GR4

RESPIRATION AMOUNT
INDICATOR SIZE

# FIG. 15

GR5

RESPIRATION AMOUNT
INDICATOR SIZE

# FIG. 16

GR6

PR61
INDICATOR PREDICTION
ARRIVAL POINT

LN62

LN61

IL61

INCREASE
AMOUNT

CR61
CURRENT
INSPIRATION AMOUNT

t61 t62

—— RESPIRATION AMOUNT
--- INDICATOR SIZE
---- PREDICTED SIZE

# FIG. 17

MK11

ID11

PP11

# FIG. 18

EP 4 099 317 A1

EP 4 099 317 A1

## FIG. 19

# FIG. 20

INSPIRATION AMOUNT BEFORE UTTERANCE

EP 4 099 317 A1

# FIG. 21

INFORMATION PROCESSING APPARATUS — 100A

**COMMUNICATION UNIT** — 110

**INPUT UNIT** — 12

**OUTPUT UNIT** — 13

**DISPLAY UNIT** — 16

**SENSOR UNIT** — 17
  - **RESPIRATION SENSOR** — 171

**CONTROL UNIT** — 130
  - **ACQUISITION UNIT** — 131
  - **PREDICTION UNIT** — 132
  - **DETERMINATION UNIT** — 133
  - **EXECUTION UNIT** — 134
  - **TRANSMISSION UNIT** — 135

**STORAGE UNIT** — 120
  - **RESPIRATION INFORMATION STORAGE UNIT** — 121
  - **USER INFORMATION STORAGE UNIT** — 122
  - **THRESHOLD INFORMATION STORAGE UNIT** — 123
  - **FUNCTION INFORMATION STORAGE UNIT** — 124

# FIG. 22

<table>
<tr><td colspan="2">**INTERNATIONAL SEARCH REPORT**</td><td>International application No.<br>PCT/JP2021/000674</td></tr>
</table>

**A. CLASSIFICATION OF SUBJECT MATTER**
G10L 15/00(2013.01)i; G10L 15/28(2013.01)i; G06F 3/01(2006.01)i; G06F 3/16(2006.01)i
FI: G06F3/01 510; G10L15/00 200N; G06F3/16 610; G10L15/28 230K
According to International Patent Classification (IPC) or to both national classification and IPC

**B. FIELDS SEARCHED**

Minimum documentation searched (classification system followed by classification symbols)
G10L15/00; G10L15/28; G06F3/01; G06F3/16

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-028702 A (SHARP CORP.) 21 February 2019 (2019-02-21) paragraphs [0012]-[0023], [0082]-[0084], [0093]-[0095], [0097], [0106]-[0100],[0132]-[0135], [0151], [0154]-[0155], [0161], [0172] | 1-20 |
| A | JP 2014-092892 A (NEC CASIO MOBILE COMMUNICATIONS LTD.) 19 May 2014 (2014-05-19) | 1-20 |
| A | JP 2013-542470 A (NOVODIGIT SARL) 21 November 2013 (2013-11-21) | 1-20 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 March 2021 (16.03.2021) | Date of mailing of the international search report<br>06 April 2021 (06.04.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

| | | International application No. |
|---|---|---|
| | | PCT/JP2021/000674 |

| Patent Documents referred in the Report | Publication Date | Patent Family | Publication Date |
|---|---|---|---|
| JP 2019-028702 A | 21 Feb. 2019 | (Family: none) | |
| JP 2014-092892 A | 19 May 2014 | (Family: none) | |
| JP 2013-542470 A | 21 Nov. 2013 | US 2011/0004327 A1 WO 2011/032096 A2 CN 102782459 A KR 10-2013-0022401 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017211596 A